# EUROPEAN PATENT APPLICATION

(11) **EP 4 819 524 A1**
(43) Date of publication of application: **07.10.2026**
(21) Application number: 24896265.6
(22) Date of filing: 12.11.2024
(51) Int. Cl.: H04L 5/00

(54) **RRC SIGNALING TRANSMISSION METHOD AND COMMUNICATION APPARATUS**

(30) Priority: 27.11.2023 CN 202311597718
(71) Applicant: Huawei Technologies Co., Ltd., Shenzhen, Guangdong 518129 (CN)
(72) Inventor: QI, Jie, Shenzhen, Guangdong 518129 (CN)
(74) Representative: Huawei European IPR
(86) International application number: PCT/CN2024/131588
(87) International publication number: WO 2025/113174

(57) **Abstract**

An RRC signaling transmission method and a communication apparatus are provided. In a carrier aggregation scenario, if a CSI-RS resource configuration of a first carrier (for example, a PCC) is the same as a CSI-RS resource configuration of another carrier (for example, a plurality of SCCs), in RRC signaling, indication information (for example, a CC list) may be added to a CSI-RS resource configuration part of the first carrier, where the indication information indicates that the CSI-RS resource configuration of the first carrier is the same as the CSI-RS resource configuration corresponding to the another CC, and the RRC signaling may omit configuration information of a CSI-RS resource on the another carrier; or an identifier of the first carrier may be added to a CSI-RS resource configuration part of the another carrier in the RRC signaling, and the RRC signaling may omit specific configuration information of a CSI-RS resource on the another carrier. In this way, a length (overheads) of the RRC signaling is reduced, and consumption of communication resources by the RRC signaling is reduced.

## Description

This application claims priority to Chinese Patent Application No. 202311597718.9, filed with the China National Intellectual Property Administration on November 27, 2023 and entitled "RRC SIGNALING TRANSMISSION METHOD AND COMMUNICATION APPARATUS", which is incorporated herein by reference in its entirety.

### TECHNICALFIELD

This application relates to the communication field, and more specifically, to an RRC signaling transmission method and a communication apparatus.

### BACKGROUND

To further increase a transmission rate, a carrier aggregation (carrier aggregation, CA) technology is supported in a protocol, to be specific, a plurality of component carriers (component carriers, CCs) are aggregated together for data transmission, to increase a data transmission bandwidth and increase a data transmission rate. For each CC accessed by a terminal device, a base station needs to configure a channel state information-reference signal (channel state information-reference signal, CSI-RS) resource for the CC by using radio resource control (radio resource control, RRC) signaling. One terminal may access a plurality of CCs through CA. As a quantity of CCs and a bandwidth continuously increase, a CSI-RS resource respectively corresponding to each of the plurality of CCs needs to be configured in RRC signaling. Consequently, overheads (or a length) of the RRC signaling increase, more communication resources are needed for transmission of the RRC signaling, and consumption of communication resources is increased.

### SUMMARY

This application provides an RRC signaling transmission method and a communication apparatus, to reduce a length (overheads) of RRC signaling, and reduce consumption of communication resources by the RRC signaling.

According to a first aspect, an RRC signaling transmission method is provided. The method may be performed by a network device, may be performed by a chip, a chip system, or a processor that supports the network device in implementing the method, or may be performed by a logical node, a logical module, software, or the like that can implement all or some of functions of the network device. The method includes: sending RRC signaling, where the RRC signaling includes a CSI-RS resource configuration corresponding to a first CC and indication information, the indication information indicates that the CSI-RS resource configuration corresponding to the first CC is the same as a CSI-RS resource configuration respectively corresponding to at least one CC, and both the first CC and the at least one CC are carriers serving a terminal device. The RRC signaling does not include the CSI-RS resource configuration respectively corresponding to the at least one CC.

According to the RRC signaling transmission method provided in the first aspect, in a carrier aggregation scenario, if a CSI-RS resource configuration of a carrier (for example, the first CC) is the same as a CSI-RS resource configuration of another carrier (a second CC), an identifier of the first CC may be added to a CSI-RS resource configuration part of the second carrier in the RRC signaling, where the identifier of the first CC indicates that the CSI-RS resource configuration corresponding to the second CC is the same as the CSI-RS resource configuration corresponding to the first CC. The RRC signaling may not need to include specific configuration information of a CSI-RS resource on the second CC, so that a length (overheads) of the RRC signaling is reduced, to resolve a problem of a large length (high overheads) of the RRC signaling, and reduce consumption of communication resources by the RRC signaling.

In a possible implementation of the first aspect, the indication information includes a CC list, and the CC list includes an identifier respectively corresponding to the at least one CC. In this implementation, specific CCs whose corresponding NZP CSI-RS resource configurations are the same as an NZP CSI-RS resource configuration corresponding to the first CC can be more accurately indicated. This improves accuracy of the indication information, is easy to implement, and can reduce overheads of the indication information.

For example, the CSI-RS resource configuration includes at least one of an NZP CSI-RS resource configuration or a CSI-IM resource configuration. In this implementation, because an NZP CSI-RS resource configuration or a CSI-IM resource configuration includes a relatively large amount of configuration information, a gain achieved by reducing a length of the RRC signaling is significant.

For example, an NZP CSI-RS may be used for time/frequency tracking (Time/Frequency Tracking), CSI computation (CSI computation), L1-RSRP computation, L1-SINR computation, or the like. For example, when a ZP CSI-RS is used for time/frequency tracking, the NZP CSI-RS may be a TRS. Optionally, the NZP CSI-RS may be further used for mobility management.

For example, the first CC is a PCC, and the at least one CC is an SCC. In this implementation, a corresponding CSI-RS resource configuration part of the PCC is followed by an SCC list, which matches an actual scenario, improves practicability of the method provided in this application, and achieves a significant gain.

For example, the first CC may alternatively be an SCC, and each CC in the CC list is also an SCC.

For example, when the RRC signaling includes the NZP CSI-RS resource configuration corresponding to the first CC and the CC list, the RRC signaling does not need to include an NZP CSI-RS resource configuration respectively corresponding to each CC in the CC list. In other words, an NZP CSI-RS resource does not need to be configured for each CC in the CC list in the RRC signaling, that is, NZP CSI-RS resource configuration information of each CC in the CC list is deleted from the RRC signaling, to achieve a configuration-free effect.

For example, an NZP CSI-RS resource or a CSI-IM resource may be configured for each CC in "CSI-MeasConfig" in the RRC signaling, and the indication information is located in an NZP CSI-RS resource configuration part or a CSI-IM resource part in a "CSI-MeasConfig" field corresponding to the first CC.

Optionally, for an NZP CSI-RS resource configuration used for mobility management, the indication information (for example, the foregoing CC list) may be added to a "CSI-RS-ResourceConfigMobility" part corresponding to the first CC in the RRC signaling. For a ZP CSI-RS resource configuration, the indication information (for example, the foregoing CC list) may be added to a "PDSCH-Config IE" part corresponding to the first CC in the RRC signaling. In this way, the RRC signaling does not need to include an NZP CSI-RS resource configuration used for mobility management or a ZP CSI-RS resource configuration that corresponds to each CC in the CC list, so that a length (overheads) of the RRC signaling can also be reduced, to resolve a problem of a large length (high overheads) of the RRC signaling, and reduce consumption of communication resources by the RRC signaling.

According to a second aspect, an RRC signaling transmission method is provided. The method may be performed by a network device, may be performed by a chip, a chip system, or a processor that supports the network device in implementing the method, or may be performed by a logical node, a logical module, software, or the like that can implement all or some of functions of the network device. The method includes: sending RRC signaling, where the RRC signaling includes a CSI-RS resource configuration corresponding to a first CC, a CSI-RS resource configuration part of a second CC in the RRC signaling includes an identifier of the first CC, the identifier of the first CC indicates that a CSI-RS resource configuration corresponding to the second CC is the same as the CSI-RS resource configuration corresponding to the first CC, and both the first CC and the second CC are carriers serving a terminal device. The CSI-RS resource configuration part of the second CC in the RRC signaling does not include the CSI-RS resource configuration corresponding to the second CC.

According to the RRC signaling transmission method provided in the second aspect, in a carrier aggregation scenario, if a CSI-RS resource configuration of a carrier (for example, the first CC) is the same as a CSI-RS resource configuration of another carrier (the second CC), the identifier of the first CC may be added to the CSI-RS resource configuration part of the second carrier in the RRC signaling, where the identifier of the first CC indicates that the CSI-RS resource configuration corresponding to the second CC is the same as the CSI-RS resource configuration corresponding to the first CC. The RRC signaling may not need to include specific configuration information of a CSI-RS resource on the second CC, so that a length (overheads) of the RRC signaling is reduced, to resolve a problem of a large length (high overheads) of the RRC signaling, and reduce consumption of communication resources by the RRC signaling.

For example, the first CC is a PCC or an SCC, and the second CC is an SCC. In this implementation, an identifier of the PCC or another SCC is added to a CSI-RS resource configuration part corresponding to the SCC, which matches an actual scenario, improves practicability of the method provided in this application, and achieves a significant gain.

For example, the CSI-RS resource configuration includes at least one of an NZP CSI-RS resource configuration or a CSI-IM resource configuration. In this implementation, because an NZP CSI-RS resource configuration or a CSI-IM resource configuration includes a relatively large amount of configuration information, a gain achieved by reducing a length of the RRC signaling is significant.

For example, the first CC is a PCC or an SCC, and the second CC is an SCC.

For example, when the RRC signaling includes an NZP CSI-RS resource configuration corresponding to the first CC and a CC list, the RRC signaling does not need to include an NZP CSI-RS resource configuration respectively corresponding to each CC in the CC list. In other words, an NZP CSI-RS resource does not need to be configured for each CC in the CC list in the RRC signaling, that is, NZP CSI-RS resource configuration information of each CC in the CC list is deleted from the RRC signaling, to achieve a configuration-free effect.

For example, an NZP CSI-RS resource or a CSI-IM resource may be configured for each CC in "CSI-MeasConfig" in the RRC signaling, and the identifier of the first CC is located in an NZP CSI-RS resource configuration part or a CSI-IM resource part in a "CSI-MeasConfig" field corresponding to the second CC.

Optionally, for an NZP CSI-RS resource configuration used for mobility management, the identifier of the first CC may be added to a "CSI-RS-ResourceConfigMobility" part corresponding to the second CC in the RRC signaling. For a ZP CSI-RS resource configuration, the identifier of the first CC may be added to a "PDSCH-Config IE" part corresponding to the second CC in the RRC signaling. In this way, the RRC signaling does not need to include an NZP CSI-RS resource configuration used for mobility management or a ZP CSI-RS resource configuration that corresponds to the second CC, so that a length (overheads) of the RRC signaling can also be reduced, to resolve a problem of a large length (high overheads) of the RRC signaling, and reduce consumption of communication resources by the RRC signaling.

According to a third aspect, an RRC signaling transmission method is provided. The method may be performed by a terminal device, or may be a chip, a chip system, a processor, or the like that supports the terminal device in implementing the method. The method includes: receiving RRC signaling, where the RRC signaling includes a CSI-RS resource configuration corresponding to a first CC and indication information, the indication information indicates that the CSI-RS resource configuration corresponding to the first CC is the same as a CSI-RS resource configuration respectively corresponding to at least one CC, and both the first CC and the at least one CC are carriers serving the terminal device; and determining, based on the RRC signaling, the CSI-RS resource configuration respectively corresponding to the at least one CC. The RRC signaling does not include the CSI-RS resource configuration respectively corresponding to the at least one CC.

According to the RRC signaling transmission method provided in the third aspect, in a carrier aggregation scenario, if the CSI-RS resource configuration of the first CC is the same as a CSI-RS resource configuration of another carrier, the indication information (for example, a CC list) may be added to a CSI-RS resource configuration part of the first carrier in the RRC signaling, to indicate that the CSI-RS resource configuration of the first carrier is the same as a CSI-RS resource configuration of a CC in the CC list. The RRC signaling may not need to include configuration content of a CSI-RS resource on the another carrier, so that a length (overheads) of the RRC signaling is reduced, to resolve a problem of a large length (high overheads) of the RRC signaling, and reduce consumption of communication resources by the RRC signaling.

In a possible implementation of the third aspect, the indication information includes a CC list, and the CC list includes an identifier respectively corresponding to the at least one CC.

In a possible implementation of the third aspect, the CSI-RS resource configuration includes at least one of an NZP CSI-RS resource configuration or a CSI-IM resource configuration.

In a possible implementation of the third aspect, the first CC is a PCC, and the at least one CC is an SCC.

In a possible implementation of the third aspect, the indication information is located in an NZP CSI-RS resource configuration part in a "CSI-MeasConfig" field corresponding to the first CC.

For a technical effect corresponding to any one of the possible implementations of the third aspect, refer to the technical effect corresponding to any one of the implementations of the first aspect. Details are not described herein again.

According to a fourth aspect, an RRC signaling transmission method is provided. The method may be performed by a terminal device, or may be a chip, a chip system, a processor, or the like that supports the terminal device in implementing the method. The method includes: receiving RRC signaling, where the RRC signaling includes a CSI-RS resource configuration corresponding to a first CC, a CSI-RS resource configuration part of a second CC in the RRC signaling includes an identifier of the first CC, and the identifier of the first CC indicates that a CSI-RS resource configuration corresponding to the second CC is the same as the CSI-RS resource configuration corresponding to the first CC; and determining, based on the RRC signaling, the CSI-RS resource configuration corresponding to the second CC. The CSI-RS resource configuration part of the second CC in the RRC signaling does not include the CSI-RS resource configuration corresponding to the second CC.

According to the RRC signaling transmission method provided in the fourth aspect, in a carrier aggregation scenario, if a CSI-RS resource configuration of a carrier (for example, the first CC) is the same as a CSI-RS resource configuration of another carrier (the second CC), the identifier of the first CC may be added to the CSI-RS resource configuration part of the second carrier in the RRC signaling, where the identifier of the first CC indicates that the CSI-RS resource configuration corresponding to the second CC is the same as the CSI-RS resource configuration corresponding to the first CC. The RRC signaling may not need to include specific configuration information of a CSI-RS resource on the second CC, so that a length (overheads) of the RRC signaling is reduced, to resolve a problem of a large length (high overheads) of the RRC signaling, and reduce consumption of communication resources by the RRC signaling.

In a possible implementation of the fourth aspect, the CSI-RS resource configuration includes at least one of an NZP CSI-RS resource configuration or a CSI-IM resource configuration.

In a possible implementation of the fourth aspect, the first CC is a PCC or an SCC, and the second CC is an SCC.

In a possible implementation of the fourth aspect, the identifier of the first CC is located in an NZP CSI-RS resource configuration part in a "CSI-MeasConfig" field corresponding to the second CC.

For a technical effect corresponding to any one of the possible implementations of the fourth aspect, refer to the technical effect corresponding to any one of the implementations of the second aspect. Details are not described herein again.

According to a fifth aspect, a communication apparatus is provided. The apparatus includes a module (for example, including a processing module and an interface module) configured to perform steps in any one of the first aspect or the possible implementations of the first aspect, or a module (for example, including a processing module and an interface module) configured to perform steps in any one of the second aspect or the possible implementations of the second aspect. The apparatus may be a network device, may be a chip, a chip system, a processor, or the like in the network device, or may be a logical node, a logical module, software, or the like that can implement all or some of functions of the network device.

According to a sixth aspect, a communication apparatus is provided. The apparatus includes at least one processor and a memory. The at least one processor is configured to perform the method in any one of the first aspect or the possible implementations of the first aspect, or the method in any one of the second aspect or the possible implementations of the second aspect. The apparatus may be a network device, may be a chip, a chip system, a processor, or the like in the network device, or may be a logical node, a logical module, software, or the like that can implement all or some of functions of the network device.

According to a seventh aspect, a communication apparatus is provided. The apparatus includes at least one processor and an interface circuit. The at least one processor is configured to perform the method in any one of the first aspect or the possible implementations of the first aspect, or the method in any one of the second aspect or the possible implementations of the second aspect. The apparatus may be a network device, may be a chip, a chip system, a processor, or the like in the network device, or may be a logical node, a logical module, software, or the like that can implement all or some of functions of the network device.

According to an eighth aspect, a communication apparatus is provided. The apparatus includes a module (for example, including a processing module and an interface module) configured to perform steps in any one of the third aspect or the possible implementations of the third aspect, or a module (for example, including a processing module and an interface module) configured to perform steps in any one of the fourth aspect or the possible implementations of the fourth aspect. The apparatus may be a terminal device, or may be a chip, a chip system, a processor, or the like in the terminal device.

According to a ninth aspect, a communication apparatus is provided. The apparatus includes at least one processor and a memory. The at least one processor is configured to perform the method in any one of the third aspect or the possible implementations of the third aspect, or the method in any one of the fourth aspect or the possible implementations of the fourth aspect. The apparatus may be a terminal device, or may be a chip, a chip system, a processor, or the like in the terminal device.

According to a tenth aspect, a communication apparatus is provided. The apparatus includes at least one processor and an interface circuit. The at least one processor is configured to perform the method in any one of the third aspect or the possible implementations of the third aspect, or the method in any one of the fourth aspect or the possible implementations of the fourth aspect. The apparatus may be a terminal device, or may be a chip, a chip system, a processor, or the like in the terminal device.

According to an eleventh aspect, a network device is provided. The network device includes the communication apparatus provided in the fifth aspect, or the network device includes the communication apparatus provided in the sixth aspect, or the network device includes the communication apparatus provided in the seventh aspect.

According to a twelfth aspect, a terminal device is provided. The terminal device includes the communication apparatus provided in the eighth aspect, or the terminal device includes the communication apparatus provided in the ninth aspect, or the terminal device includes the communication apparatus provided in the tenth aspect.

According to a thirteenth aspect, a computer program product is provided. The computer program product includes a computer program. When being executed by a processor, the computer program is configured to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to a fourteenth aspect, a computer-readable storage medium is provided. The computer-readable storage medium stores a computer program. When being executed, the computer program is configured to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

According to a fifteenth aspect, a chip is provided. The chip includes: a processor, configured to: invoke a computer program from a memory and run the computer program, to cause a communication device in which the chip is installed to perform the method in any one of the first aspect or the possible implementations of the first aspect, the method in any one of the second aspect or the possible implementations of the second aspect, the method in any one of the third aspect or the possible implementations of the third aspect, or the method in any one of the fourth aspect or the possible implementations of the fourth aspect.

### BRIEF DESCRIPTION OF DRAWINGS

FIG. 1 is a diagram of an example of a communication scenario to which a method provided in this application is applicable according to an embodiment of this application;
FIG. 2 is a diagram of another example of a communication scenario to which a method provided in this application is applicable according to an embodiment of this application;
FIG. 3 is a diagram of an example of a gNB architecture according to an embodiment of this application;
FIG. 4 is a diagram of an example of a radio access network device (that is, a network device) according to an embodiment of this application;
FIG. 5 is a diagram of an example of a user plane protocol layer structure between a network device and a terminal device according to an embodiment of this application;
FIG. 6 is a diagram of an example of a control plane (which may also be referred to as a signaling plane) protocol layer structure between a terminal device and a network device according to an embodiment of this application;
FIG. 7 is a schematic flowchart of an example of an RRC signaling transmission method according to an embodiment of this application;
FIG. 8 is diagram of an example of a form of an NZP CSI-RS resource (NZP CSI-RS-Resource) configuration of a first CC according to an embodiment of this application;
FIG. 9 is a diagram of an example of a form of adding an SCC list (scc_List SEQUENCE) to an NZP CSI-RS resource on a first CC according to an embodiment of this application;
FIG. 10 is a schematic flowchart of another example of an RRC signaling transmission method according to an embodiment of this application;
FIG. 11 is a block diagram of an example of a communication apparatus according to an embodiment of this application;
FIG. 12 is a block diagram of another example of a communication apparatus according to an embodiment of this application;
FIG. 13 is a block diagram of an example of a communication apparatus according to an embodiment of this application;
FIG. 14 is a block diagram of another example of a communication apparatus according to an embodiment of this application;
FIG. 15 is a block diagram of an example of a terminal device according to an embodiment of this application; and
FIG. 16 is a block diagram of an example of a network device according to an embodiment of this application.

### DESCRIPTION OF EMBODIMENTS

The following describes technical solutions of this application with reference to the accompanying drawings.

In descriptions of embodiments of this application, "/" means "or" unless otherwise specified. For example, A/B may indicate A or B. The term "and/or" in this specification describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In embodiments of this application, a terminal device or a network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

New radio (new radio, NR) is a new radio access technology (radio access technology, RAT) developed by the 3rd Generation Partnership Project (3rd Generation Partnership Project, 3GPP) for a 5th generation mobile communication network (5G). NR is a global common standard for air interfaces in 5G networks. 3GPP specifications define technical details for NR. A 5G communication system includes a non-standalone (non-standalone, NSA) networking mode and a standalone (standalone, SA) networking mode in terms of networking modes.

In an SA scenario, as stipulated in an NR protocol, a maximum size of a packet data convergence protocol (packet data convergence protocol, PDCP) service data unit (service data unit, PDCP SDU) is 9000 bytes (bytes). In an NSA scenario, as stipulated in a long term evolution (long term evolution, LTE) protocol, a maximum size of a PDCP SDU is 8188 bytes.

Currently, to further increase a transmission rate, a CA technology is supported in a protocol, to be specific, a plurality of CCs are aggregated together for data transmission, to increase a data transmission bandwidth and increase a data transmission rate. The CA technology may include: intra-band (band) contiguous CA, intra-band (band) non-contiguous CA, and inter-band CA. Intra-band (band) contiguous CA and intra-band (band) non-contiguous CA may be collectively referred to as intra-frequency CA, and inter-band CA may also be referred to as multi-band CA.

Currently, two bands are specified in 5G: a frequency range 1 (Frequency range 1, FR1) and a frequency range 2 (Frequency range 2, FR2). FR1 refers to a sub-6 GHz band, covering 450 MHz to 7125 MHz. An operating band of FR2 is between 24.25 GHz and 52.6 GHz, that is, a millimeter wave band. In R17 and earlier protocol versions, intra-frequency CA can reach 800 M in FR2. Multi-band CA in FR1 and FR2 supports a bandwidth greater than 800 M. A quantity of CCs included in CA may be 9, and a quantity of CCs included in CA in R18 and a later protocol version may be 10.

A channel state information-reference signal (channel state information-reference signal, CSI-RS) is a very important reference signal in 5G. The CSI-RS is mainly used in the following aspects:

Obtaining channel state information: The CSI-RS is used for measuring a channel between a base station and a terminal device, and obtaining channel state information needed for scheduling and link adaptation, such as a precoding matrix and channel quality information.

Beam management: The CSI-RS is used for obtaining beamforming weights of beams on a terminal device side and a base station side, for beam measurement during the beam management.

Time/frequency tracking: The CSI-RS is used for precise time/frequency synchronous tracking to obtain a quasi co-location (Quasi Co-Location, QCL) parameter. In this case, the CSI-RS may also be referred to as a tracking reference signal (tracking reference signal, TRS).

Mobility management: The CSI-RS is used for completing mobility management related measurement.

Interference measurement: The CSI-RS may be further used for interference measurement (Interference Measurement, IM). In this case, the CSI-RS may also be referred to as CSI IM.

Rate matching: The CSI-RS is used for rate matching (Rate Matching) of a physical downlink shared channel (physical downlink shared channel, PDSCH).

CSI-RSs may be classified into a non-zero power CSI-RS (Non-Zero Power CSI-RS, NZP CSI-RS) and a zero power CSI-RS (Zero Power CSI-RS, ZP CSI-RS). The NZP CSI-RS is mainly used for time/frequency tracking (Time/Frequency Tracking), CSI computation (CSI computation), L1 reference signal received power (reference signal received power, L1 RSRP) computation (L1-RSRP Computation), L1 signal to interference plus noise ratio (signal to interference plus noise ratio, L1 SINR) computation (L1-SINR Computation), mobility management (Mobility management), or the like. L1 RSRP and an L1-SINR may be used for beam management. The ZP CSI-RS is mainly used for rate matching (Rate Matching) of a physical downlink shared channel (physical downlink shared channel, PDSCH). Time-frequency resource sets of the NZP CSI-RS and the ZP CSI-RS are defined in a protocol.

For example, Table 1 is an example table of specific content and functions included in an example of a CSI-RS.

**Table 1**

| | | | |
|---|---|---|---|
| CSI-RS function | | CSI-RS Type | Remark |
| Channel quality measurement | CSI obtaining | NZP CSI-RS | Used for channel state information (CSI) measurement. Content reported by a terminal device includes: |
| | | CSI-IM | |
| | Beam management | NZP CSI-RS | a signal quality indicator (channel quality indicator, CQI), a precoding matrix indicator PrecodingMatrixIndicator, a rank indicator (RI, Rank Indicator), and a layer indicator (Layer Indicator). |
| | Radio link measurement (RLM)/radio resource management (RRM) | NZP CSI-RS | Used for beam measurement. Content reported by a terminal device includes L1-RSRP and a CSI-RS resource indicator (CSI-RS resource indicator, CRI). |
| Time-frequency | offset tracking | TRS | Used for refined time-frequency offset tracking. |

Currently, a terminal device may access a plurality of carriers through CA, and the plurality of carriers may be classified into a primary component carrier (primary component carrier, PCC) and a secondary component carrier (secondary component carrier, SCC). Generally, cells (serving cells) serving the terminal may include a primary cell (primary cell, PCell) and one or more secondary cells (secondary cell, SCell). The PCell may be determined during initial connection establishment (connection establishment) or reconnection. The PCell operates on the PCC. The SCell is a cell added through RRC reconfiguration and provides an additional band resource. One SCell operates on one SCC. The terminal device initiates a random access procedure only on the PCC, and the PCC is always in an active state. The SCC may be added/modified/released by using an RRC connection reconfiguration message (RRC ConnectionReconfiguration), and each CC corresponds to one cell (cell).

For each CC (including one PCC and one or more SCCs) accessed by the terminal device, a base station needs to configure a CSI-RS resource and a time-domain behavior of a CSI-RS for the CC by using RRC signaling. For example, the time-domain behavior of the CSI-RS includes a periodic behavior, a semi-persistent behavior, and an aperiodic behavior.

For NZP CSI-RSs, in addition to an NZP CSI-RS used for mobility (Mobility) management, an NZP CSI-RS used for time/frequency tracking (Time/Frequency Tracking), an NZP CSI-RS used for CSI computation (CSI computation), an NZP CSI-RS used for L1-RSRP computation (L1-RSRP Computation), an NZP CSI-RS used for L1-SINR computation (L1-SINR Computation), and a CSI-RS resource used for CSI-IM are all configured by using a CSI measurement configuration information element (CSI-MeasConfig IE) in the RRC signaling. Each CSI measurement configuration information element (CSI-MeasConfig IE) includes one or more NZP CSI-RS resources (NZP CSI-RS Resources), one or more CSI-IM resources (CSI-IM-Resources), or one or more synchronization signal block (System Synchronization Block, SSB) resources (CSI-SSB-Resources). An SSB is used for beam management. In other words, the CSI measurement configuration information element (CSI-MeasConfig IE) indicates a time-frequency resource of the NZP CSI-RSs for the foregoing purposes and a time-frequency resource of the CSI-IM.

In conclusion, for each CC, a network device (for example, the base station) needs to configure at least one of the time-frequency resource of the NZP CSI-RS or the time-frequency resource of the CSI-IM on the CC for the terminal device by using the CSI measurement configuration information element (CSI-MeasConfig IE) in the RRC signaling. One terminal may access a plurality of CCs through CA. As a quantity of CCs and a bandwidth continuously increase, a resource of an NZP CSI-RS or a time-frequency resource of CSI-IM that respectively corresponds to each of the plurality of CCs needs to be configured in RRC signaling. Consequently, overheads (or a length) of the RRC signaling increase, more communication resources are needed for transmission of the RRC signaling, and consumption of communication resources is increased.

Currently, an RRC segmentation (segmentation of RRC messages) technology is proposed to reduce a length of RRC signaling. For example, when a length of one piece of RRC signaling exceeds a maximum limit (for example, 9000 bytes or 8188 bytes) of a PDCP SDU, the RRC signaling may be divided into a plurality of segments or a plurality of fragments (segments) at an RRC layer, and each segment (each segment) is transmitted by using a separate (separate) RRC PDU. A receive end device reassembles (reassembles) a plurality of received segments (segments) to obtain complete RRC signaling. All segments of one piece of RRC signaling need to be sent before another piece of RRC signaling is sent. The RRC segments support both an uplink and a downlink.

However, the RRC segmentation technology cannot fundamentally resolve a problem of high overheads of the RRC signaling. For example, in a scenario in which the base station configures, for the terminal device by using RRC signaling, an NZP CSI-RS resource and a CSI-IM resource that correspond to each of a plurality of CCs, because the terminal device may access a large quantity of CCs, a length of the RRC signaling is large. Even if the RRC segmentation technology is used, a quantity of segments needs to be continuously extended, and splitting, transmission, and reassembling of the RRC signaling cause problems in terms of performance, reliability, and the like. Consequently, reliability of transmission of the RRC signaling is reduced, and a problem of a large length (high overheads) of the RRC signaling cannot be resolved.

In view of this, this application provides an RRC signaling transmission method and a communication apparatus. In a carrier aggregation scenario, if a CSI-RS resource configuration of a carrier (for example, a first carrier) is the same as a CSI-RS resource configuration of another carrier, in RRC signaling, indication information may be added to a CSI-RS resource configuration part of the first carrier, where the indication information indicates that the CSI-RS resource configuration of the first carrier is the same as the CSI-RS resource configuration corresponding to the another CC, and the RRC signaling may omit configuration information of a CSI-RS resource (corresponding to another carrier) on the another carrier; or an identifier of the first carrier may be added to a CSI-RS resource configuration part of the another carrier in the RRC signaling, and the RRC signaling may omit specific configuration information of a CSI-RS resource on the another carrier, so that a length (overheads) of the RRC signaling is reduced, to resolve a problem of a large length (high overheads) of the RRC signaling, and reduce consumption of communication resources by the RRC signaling.

It may be understood that the method provided in this application may be applied to a carrier aggregation scenario.

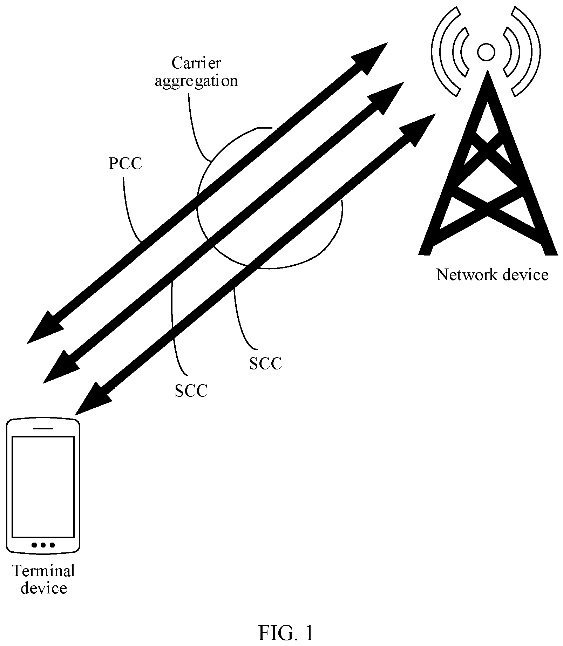

For example, FIG. 1 is a diagram of an example of a communication scenario to which the method provided in this application is applicable. As shown in FIG. 1, a terminal device communicates with a network device. The terminal device may separately communicate with the network device on a plurality of CCs (three CCs shown in FIG. 1) through CA. One of the plurality of CCs is a PCC, and the other CCs are SCCs. The terminal device may communicate with the network device by using these CCs (including the PCC and the SCCs). When configuring an NZP CSI-RS resource and a CSI-IM resource for each CC by using RRC signaling, the network device may use the RRC signaling transmission method provided in this application.

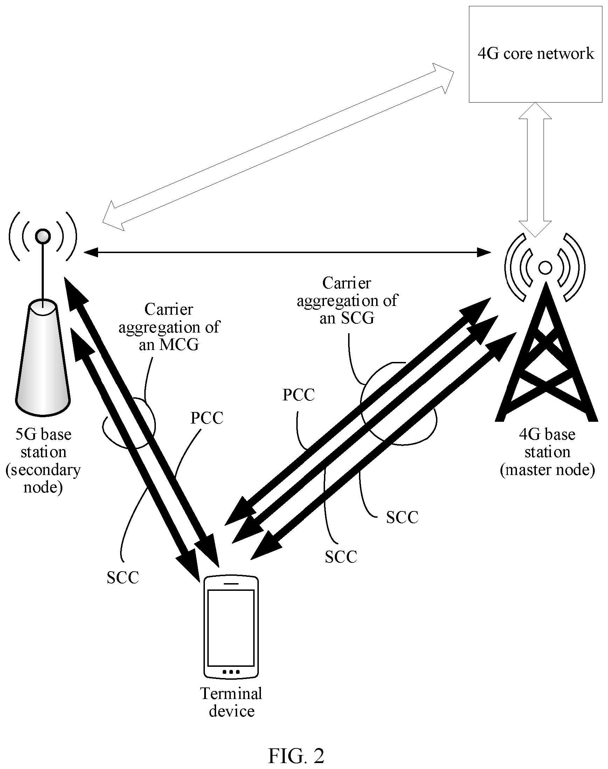

For another example, FIG. 2 is a diagram of another example of a communication scenario to which the method provided in this application is applicable. As shown in FIG. 2, a terminal device communicates with two network devices. The two network devices may be network devices of different standards (for example, a 4G base station and a 5G base station), and both the 4G base station and the 5G base station access a 4G core network. The communication scenario shown in FIG. 2 is a dual connectivity (dual connectivity, DC) communication scenario in an NSA architecture. Based on dual connectivity, carrier aggregation may be performed in both a 4G part and a 5G part. In dual connectivity, a mobile phone accesses both the 4G base station and the 5G base station.

For example, in a non-standalone networking option 3 (Option 3) series architecture, a 4G base station serves as a control plane anchor and is referred to as a master node (Master Node), and a 5G base station is referred to as a secondary node (Secondary Node). Both the master node and the secondary node may perform carrier aggregation. Optionally, a primary component carrier and a secondary component carrier of the master node may also be referred to as a PCell and an SCell, and a primary component carrier and a secondary component carrier of the secondary node are referred to as a PSCell and an SCell. The master node and the secondary node that support carrier aggregation may also be referred to as an MCG (Master Cell Group, master cell group) and an SCG (Secondary Cell Group, secondary cell group). When configuring an NZP CSI-RS resource and a CSI-IM resource for each CC by using RRC signaling, the network device may use the RRC signaling transmission method provided in this application.

It should be understood that the communication scenario (a communication system) shown in FIG. 1 or FIG. 2 is merely an example, and should not impose any limitation on the communication scenario to which embodiments of this application are applicable. For example, the communication system shown in FIG. 1 or FIG. 2 may further include more or fewer network nodes, for example, a terminal device or a network device. Alternatively, there may be more aggregated CCs between the terminal device and the network device. It may be understood that the method provided in this application is applicable to any carrier aggregation scenario.

For example, the communication system shown in FIG. 1 or FIG. 2 may be a 3rd Generation Partnership Project (3rd Generation Partnership Project, 3GPP) related cellular system, for example, an LTE system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 4G or 5G mobile communication system (including standalone networking and non-standalone networking), an NR system, or a future-oriented evolved system (for example, a 6G mobile communication system). Alternatively, the communication system may be an open access network (open RAN, O-RAN, or ORAN), a cloud radio access network (cloud radio access network, CRAN), or a wireless fidelity (wireless fidelity, Wi-Fi) system, or may be a communication system integrating two or more of the foregoing systems. This is not limited in embodiments of this application.

Optionally, in embodiments of this application, the network device may also be referred to as an access network device, a radio access network device, a radio access network (radio access network, RAN) node, a RAN entity, an access node, or the like, and constitutes a part of the communication system, to help the terminal device implement radio access.

In a possible scenario, the network device may be any device having a wireless transceiver function. For example, a conventional universal mobile telecommunications system (Universal Mobile Telecommunications System, UMTS) and a conventional macro base station (evolved NodeB, eNB) in an LTE communication system are included. In a heterogeneous network (Heterogeneous Network, HetNet) scenario, the network device may be a micro base station eNB. In a distributed base station scenario, the network device may be a baseband unit (Baseband Unit, BBU) and a radio remote unit (Remote Radio Unit, RRU). In a cloud radio access network (Cloud Radio Access Network, CRAN) scenario, the network device may be a baseband pool (BBU pool) and an RRU. In a future wireless communication system, the network device may be a gNB, a base station subsequently evolved in 3GPP, or an access node in a Wi-Fi system, a wireless relay node, a wireless backhaul node, or the like. For example, the base station may be a macro base station, a micro base station, a pico cell, a small cell, a relay station, or a balloon station.

In another possible scenario, the network device may be a base station (base station), an evolved NodeB (evolved NodeB, eNodeB), an access point (access point, AP), a transmission reception point (transmission reception point, TRP), a next-generation base station in a 6th generation (6th generation, 6G) mobile communication system, a base station in a future mobile communication system, or the like. Optionally, the network device may alternatively be a relay node, a host node, or a radio controller in a CRAN scenario. Optionally, the network device may alternatively be an access network device in a V2X technology, for example, a road side unit (road side unit, RSU). All or some of functions of the network device in this application may be implemented by using a software function running on hardware, or may be implemented by using an instantiated virtualization function on a platform (for example, a cloud platform). The network device in this application may alternatively be a logical node, a logical module, or software that can implement all or some of functions of a radio access network device.

In an NR technology, the network device (for example, a gNB) may include one gNB central unit (Central Unit, CU) and one or more gNB distributed units (Distributed Units, DUs). The gNB-CU and the gNB-DU are different logical nodes, and may be deployed on different physical devices or deployed on a same physical device.

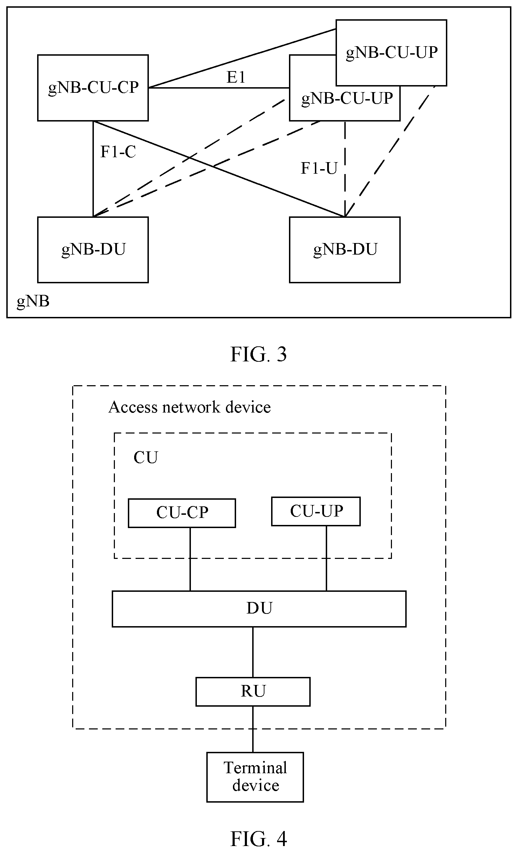

If an architecture in which a control plane and a user plane are split is considered, the gNB-CU may be further divided into a central unit-control plane (Central Unit-Control Plane, CU-CP) entity (which may also be referred to as a CU-CP node) and a central unit-user plane (Central Unit-User Plane, CU-UP) entity (which may also be referred to as a CU-UP node). The gNB-CU-CP is a control plane entity, and is configured to provide signaling control. The gNB-CU-UP is a user plane entity, and is configured to provide transmission of data of the terminal device. The gNB-CU-CP is connected to the gNB-CU-UP through an E1 interface, the gNB-CU-CP is connected to the gNB-DU through an F1-C interface, and the gNB-CU-UP is connected to the gNB-DU through an F1-U interface. A structure is shown in FIG. 3. FIG. 3 is a diagram of an architecture in which the gNB-CU-CP and the gNB-CU-UP are split.

In the architecture shown in FIG. 3, the following characteristics are further included:

One gNB includes one gNB-CU-CP, a plurality of gNB-CU-UPs, and a plurality of gNB-DUs.

One DU can be connected only to one gNB-CU-CP.

One CU-UP can be connected only to one gNB-CU-CP.

One DU can be connected to a plurality of gNB-CU-UPs under the control of a same CU-CP.

One CU-UP can be connected to a plurality of gNB-DUs under the control of a same CU-CP.

It should be understood that FIG. 3 is merely an example and should not impose any limitation on the architecture of the gNB. For example, in an architecture in which the CU and the DU are split and the CP and the UP are split, the gNB may include only one gNB-CU-UP, one gNB-CU-CP, and one gNB-DU, or may include more gNB-CU-UPs and gNB-DUs. This is not limited in this application.

For example, FIG. 4 is a diagram of another example of a radio access network device (that is, a network device). As shown in FIG. 4, the radio access network device includes one or more CUs, one or more DUs, and one or more radio units (radio units, RUs). For clarity, FIG. 4 shows only one CU, one DU, and one RU. The CU is configured to connect to a core network and the one or more DUs. Optionally, the CU may have some of functions of the core network. The CU may include a CU-CP and a CU-UP.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

In a possible scenario, for example, the network device may be the foregoing CU, DU, CU-CP, or CU-UP. The CU and the DU may be separately disposed, or may be included in a same network element, for example, a BBU. The RU may be included in a radio frequency device or a radio frequency unit, for example, included in an RRU, an active antenna unit (active antenna unit, AAU), or a remote radio head (remote radio head, RRH).

Optionally, the CU and the DU may be configured based on protocol layer functions of a wireless network implemented by the CU and the DU. For example, the CU is configured to implement functions of a packet data convergence protocol (packet data convergence protocol, PDCP) layer and a higher protocol layer (for example, an RRC layer and/or a service data adaptation protocol (service data adaptation protocol, SDAP) layer). The DU is configured to implement a function of a protocol layer (for example, a radio link control (radio link control, RLC) layer, a media access control (media access control, MAC) layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element that is in the core network and that is configured to implement the control plane function may be an access and mobility function network element, for example, an access and mobility function (access and mobility management function, AMF) network element in a 5G system. The access and mobility function network element is configured to be responsible for mobility management in a mobile network, for example, a location update of a terminal device, network registration of the terminal device, and a handover of the terminal device.

The CU-UP may interact with a network element that is in the core network and that is configured to implement a user plane function. The network element that is in the core network and that is configured to implement the user plane function, for example, a user plane function (user plane function, UPF) in the 5G system, is configured to be responsible for forwarding and receiving data in the terminal device.

The foregoing configurations of the CU and the DU are merely examples. Alternatively, functions of the CU and the DU may be configured as needed. For example, the CU or the DU may be configured to have functions of more protocol layers, or the CU or the DU may be configured to have some of processing functions of protocol layers. For example, some of functions of the RLC layer and a function of a protocol layer above the RLC layer are set on the CU, and remaining functions of the RLC layer and a function of a protocol layer below the RLC layer are set on the DU. For another example, the functions of the CU or the DU may be divided based on service types or other system requirements. For example, division may be performed based on latencies. Functions whose processing time needs to satisfy a low-latency requirement are set on the DU, and functions whose processing time does not need to satisfy the latency requirement are set on the CU.

The DU and the RU may collaborate to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include some of functions of the physical layer, and the some of the functions are closer to the MAC layer. The lower-layer function of the physical layer may include the other functions of the physical layer, and the other functions are closer to an intermediate radio frequency side.

In embodiments of this application, the terminal device may also be referred to as a terminal, user equipment (user equipment, UE), a mobile station, a mobile terminal, or the like. The terminal may be widely used in various scenarios, for example, D2D, V2X communication, machine type communication (machine type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The following describes a protocol stack structure between the terminal device and the network device by using an example.

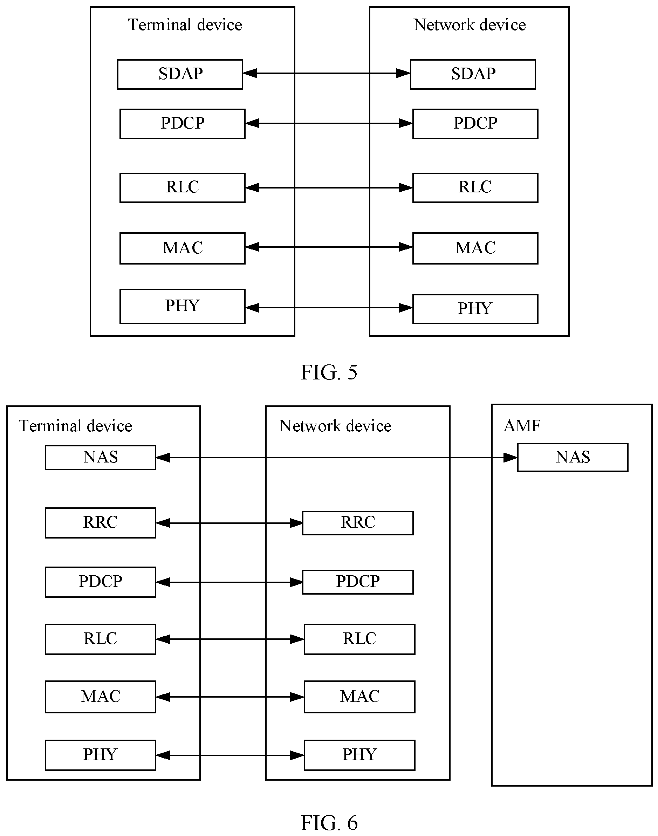

FIG. 5 is a diagram of an example of a user plane protocol layer structure between a network device and a terminal device. As shown in FIG. 5, a user plane protocol layer structure may include functions of protocol layers such as a PDCP layer, an RLC layer, a MAC layer, and a PHY layer. The physical layer is a lowest layer (layer 1), the MAC layer, the RLC layer, and the PDCP layer belong to a second layer (layer 2), and the RRC layer belongs to a third layer (layer 3). Optionally, an SDAP layer may be further included above the PDCP layer.

FIG. 6 is a diagram of an example of a control plane (which may also be referred to as a signaling plane) protocol layer structure between a terminal device and a network device.

As shown in FIG. 6, the control plane protocol layer structure between the terminal device and the network device may include functions of protocol layers such as an RRC layer, a PDCP layer, an RLC layer, a MAC layer, and a PHY layer. The RRC layer, the PDCP layer, the RLC layer, the MAC layer, and the PHY layer may be collectively referred to as an access stratum (access stratum, AS). Above the RRC layer, the terminal device may further have a non-access stratum (non-access stratum, NAS) protocol. A NAS stratum in the terminal device communicates with a NAS stratum in an access and mobility management (access and mobility management function, AMF) network element of a core network device via a network device. For example, main functions of the NAS stratum include: supporting general processes of mobility of the terminal device, such as authentication, authorization, a general terminal device configuration update, and a security control mode process; and supporting a session management process to establish and maintain a data connection between the terminal device and a data network.

It should be understood that the protocol stack structures shown in FIG. 5 and FIG. 6 are merely examples, and the functions or the purposes of the protocol layers are also examples for description, and should not impose any limitation on the functions of the protocol stacks or the protocol layers of the terminal device and the network device provided in embodiments of this application.

The following describes, with reference to a specific example, the RRC signaling transmission method provided in this application.

It should be understood that, in embodiments of this application, the method is described by using an example in which the method is performed by a terminal device and a network device. By way of example but not limitation, the terminal device in this application may be a chip, a chip system, a processor, or the like that supports the terminal device in implementing the method. This is not limited in embodiments of this application. The network device in this application may be a chip, a chip system, or a processor that supports the network device in implementing the method, or may be a logical node, a logical module, software, or the like that can implement all or some of functions of the network device.

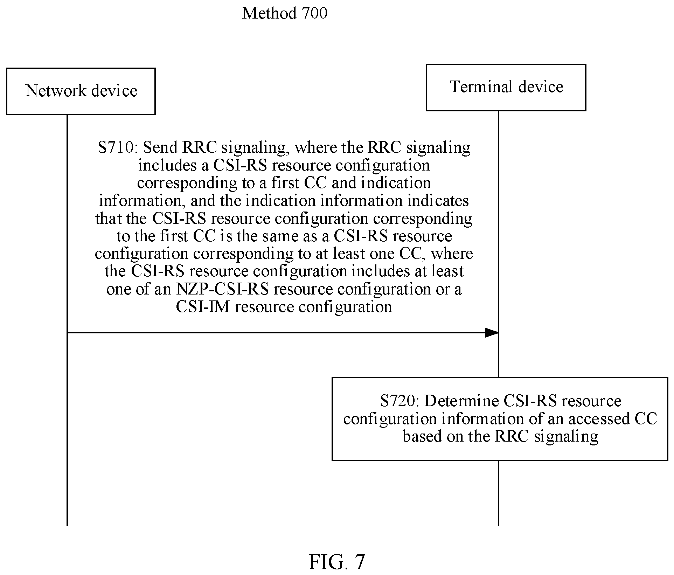

The following describes in detail the method provided in this application with reference to FIG. 7. FIG. 7 is a schematic flowchart of an RRC signaling transmission method according to an embodiment of this application. The method 700 may be applied to a scenario or a communication architecture shown in FIG. 1 or FIG. 2, and certainly may also be applied to another communication scenario or communication architecture for carrier aggregation. This is not limited in embodiments of this application.

As shown in FIG. 7, the method 700 shown in FIG. 7 may include S710 and S720. The following describes the steps in the method 700 in detail with reference to FIG. 7.

S710: A network device sends RRC signaling to a terminal device, where the RRC signaling includes a CSI-RS resource configuration corresponding to a first CC and indication information, and the indication information indicates that the CSI-RS resource configuration corresponding to the first CC is the same as a CSI-RS resource configuration corresponding to at least one CC. The CSI-RS resource configuration includes at least one of an NZP CSI-RS resource configuration or a CSI-IM resource configuration.

Correspondingly, the terminal device receives the RRC signaling.

Optionally, in this embodiment of this application, an NZP CSI-RS may be used for time/frequency tracking (Time/Frequency Tracking), CSI computation (CSI computation), L1-RSRP computation, L1-SINR computation, or the like. For example, when a ZP CSI-RS is used for time/frequency tracking, the NZP CSI-RS may be a TRS.

Certainly, in this embodiment of this application, the NZP CSI-RS may be further used for mobility management.

For ease of description, in the following examples, an NZP CSI-RS resource configuration used for time/frequency tracking (Time/Frequency Tracking), CSI computation (CSI computation), L1-RSRP computation, or L1-SINR computation is used for description.

For ease of understanding, a CC list is used as an example below to describe the indication information.

In this embodiment of this application, the CC list includes an identifier of the at least one CC, and an NZP CSI-RS resource configuration corresponding to each CC in the CC list is the same as an NZP CSI-RS resource configuration corresponding to the first CC (or of the first CC). The CC list is indicated in the RRC signaling, so that specific CCs whose corresponding NZP CSI-RS resource configurations are the same as the NZP CSI-RS resource configuration corresponding to the first CC can be more accurately indicated. This improves accuracy of the indication information, is easy to implement, and can reduce overheads of the indication information.

For example, in some possible implementations, in scenarios such as a cell (where a cell may also be referred to as a carrier) handover, a cell reconfiguration, cell addition, cell reestablishment, and cell wakeup from an inactive (inactive) state to an active (active) state, the network device needs to configure an NZP CSI-RS resource for each CC or each cell by using the RRC signaling. For example, the network device may configure an NZP CSI-RS resource for each CC by using "CSI-MeasConfig IE" in the RRC signaling.

Optionally, the first CC may be a PCC, and each CC in the CC list is an SCC.

Certainly, in another implementation of this application, the first CC may alternatively be an SCC, and each CC in the CC list is also an SCC.

It should be understood that, in this embodiment of this application, the terminal device communicates with the network device through carrier aggregation. In other words, the terminal device may separately communicate with the network device on a plurality of CCs. The plurality of CCs include the first CC and the CC included in the CC list, and the plurality of CCs are all CCs or cells serving the terminal device.

In this embodiment of this application, if NZP CSI-RS resource configurations respectively corresponding to at least some of the plurality of CCs are the same as the NZP CSI-RS resource configuration corresponding to the first CC, identifiers of the at least some of the CCs may form one CC list (CC list).

For example, it is assumed that the terminal device separately communicates with the network device on M CCs, a first CC in the M CCs may be a PCC, and all other CCs are SCCs. If NZP CSI-RS resource configurations respectively corresponding to N remaining CCs other than the first CC in the M CCs are the same as an NZP CSI-RS resource configuration corresponding to the first CC, the CC list includes identifiers respectively corresponding to the N CCs.

It should be further understood that, in this embodiment of this application, when the RRC signaling includes the NZP CSI-RS resource configuration corresponding to the first CC and the CC list, the RRC signaling does not need to include an NZP CSI-RS resource configuration respectively corresponding to each CC in the CC list. In other words, an NZP CSI-RS resource does not need to be configured for each CC in the CC list in the RRC signaling, that is, NZP CSI-RS resource configuration information of each CC in the CC list is deleted from the RRC signaling, to achieve a configuration-free effect.

For example, assuming that the CC list includes five CCs, if NZP CSI-RS resources need to be respectively configured for the five CCs in the RRC signaling in an existing manner, the RRC signaling needs to include five groups of fields (or five parts), and an NZP CSI-RS resource of one CC is configured for each group of fields (or each part). According to the method provided in this embodiment of this application, only the CC list needs to be added after the NZP CSI-RS resource configuration corresponding to the first CC. In this way, in the RRC signaling, NZP CSI-RS resources do not need to be respectively configured for the five CCs, and the RRC signaling does not need to include the five groups of fields (or the five parts). In other words, the five groups of fields (or the five parts) are saved, so that a length (overheads) of the RRC signaling is reduced, to resolve a problem of a large length (high overheads) of the RRC signaling, and reduce consumption of communication resources by the RRC signaling.

In a possible implementation, the network device may configure an NZP CSI-RS resource for each CC in "CSI-MeasConfig" in the RRC signaling.

For example, the NZP CSI-RS resource (NZP CSI-RS-Resource) configuration of the first CC may include content of the following eight items (represented as (1) to (8)):
(1) a resource type (resourceType), where an NZP CSI-RS resource of the first CC may be configured as a periodic (Periodic) resource, a semi-persistent (Semi-persistent) resource, or an aperiodic (Aperiodic) resource;
(2) an NZP CSI-RS-Resource identifier (NZP CSI-RS-ResourceId) of the first CC, that is, an identifier (Identifier, ID) indicating an NZP CSI-RS-Resource;
(3) resource mapping (resourceMapping), defining a structure of an NZP CSI-RS on the first CC, where the structure includes a physical resource block (physical resource block, PRB) occupied in frequency domain;
(4) a power control offset (powerControlOffset) relative to an NZP CSI-RS RE, that is, a power offset of a physical downlink shared channel resource element (Physical Downlink Shared Channel Resource Element, PDSCH RE) on the first CC relative to the NZP CSI-RS RE, where for example, a value range is [-8, 15] dB, and a step is 1 dB;
(5) a power control offset relative to an SSB RE (powerControlOffsetSS), that is, a power offset of the NZP CSI-RS RE on the first CC relative to the SSB RE, where for example, a value range is {-3 dB, 0 dB, 3 dB, 6 dB};
(6) a scrambling ID (scramblingID), that is, a scrambling ID of the NZP CSI-RS on the first CC;
(7) a periodicity and a slot offset (periodicityAndOffset), that is, a sending periodicity and a slot offset of a periodic or semi-persistent NZP CSI-RS resource on the first CC; and
(8) a reference to TCI-State (qcl-InfoPeriodicCSI-RS), that is, a reference to NZP CSI-RSTCI-State on the first CC, indicating a QCL source reference signal (referenceSignal) and a QCL type (qcl-Type).

Certainly, the foregoing NZP CSI-RS resource (NZP CSI-RS-Resource) configuration is merely an example, and should not impose any limitation on the NZP CSI-RS resource configuration in this embodiment of this application. In another implementation of this application, the NZP CSI-RS resource configuration may further include other content. This is not limited in embodiments of this application.

It should be understood that, for each CC, specific content of the corresponding NZP CSI-RS resource configuration is the same as the content of the NZP CSI-RS resource configuration of the first CC. For example, for a second CC in the CC list, an NZP CSI-RS resource configuration also includes the content of the foregoing items (1) to (8), and the second CC is any one of the CCs in the CC list.

The NZP CSI-RS resource configuration corresponding to each CC in the CC list also includes the foregoing configurations, and the configurations are respectively the same as NZP CSI-RS resource (NZP CSI-RS-Resource) configurations of the first CC. For example, assuming that the CC list includes the second CC, resourceType, NZP CSI-RS-ResourceId, resourceMapping, powerControlOffset, powerControlOffsetSS, scramblingID, periodicityAndOffset, qcl-InfoPeriodicCSI-RS, and the like of the second CC are respectively the same as the configurations corresponding to the first CC.

For example, a "CSI-MeasConfig" part corresponding to the first CC in the RRC signaling includes configuration content corresponding to the first CC, such as the resource type (resourceType), the NZP CSI-RS-Resource identifier (NZP CSI-RS-ResourceId), the resource mapping (resourceMapping), the power control offset relative to the NZP CSI-RS RE (powerControlOffset), the power control offset relative to the SSB RE (powerControlOffsetSS), the scrambling ID (scrambling ID), the periodicity and the slot offset (periodicityAndOffset), and the reference to TCI-State (qcl-InfoPeriodic CSI-RS). In some possible implementations of this application, the "CSI-MeasConfig" part corresponding to the first CC may further include the CC list.

A "CSI-MeasConfig" part corresponding to each CC in the CC list does not need to include configuration content corresponding to the CC, such as a resource type (resourceType), an NZP CSI-RS-Resource identifier (NZP CSI-RS-ResourceId), resource mapping (resourceMapping), a power control offset relative to an NZP CSI-RS RE (powerControlOffset), a power control offset relative to an SSB RE (powerControlOffsetSS), a scrambling ID (scramblingID), a periodicity and a slot offset (periodicityAndOffset), or a reference to TCI-State (qcl-InfoPeriodicCSI-RS).

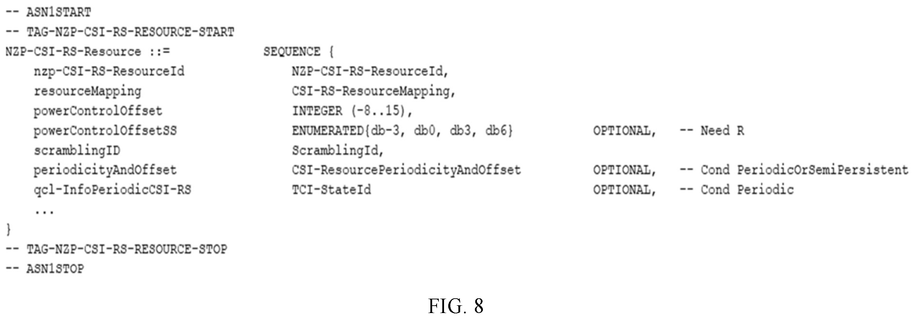

For example, a form of the NZP CSI-RS resource (NZP CSI-RS-Resource) configuration of the first CC may be shown in FIG. 8.

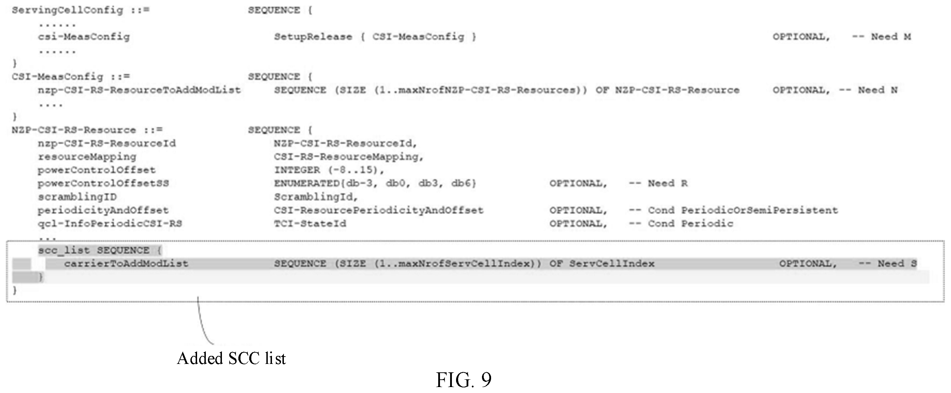

Optionally, the NZP CSI-RS resource configuration of the first CC may indicate the CC list, that is, the CC list is added to an NZP CSI-RS resource configuration part (the "CSI-MeasConfig" part) of the first CC. For example, a form of adding an SCC list (scc_List SEQUENCE) to the NZP CSI-RS resource of the first CC may be shown in FIG. 9. The NZP CSI-RS resource configuration (or the NZP CSI-RS resource configuration part) of the first CC indicates the CC list, so that it can be more clearly and accurately indicated that the NZP CSI-RS resource configuration corresponding to each CC in the CC list is the same as the NZP CSI-RS resource configuration of the first CC, to improve accuracy and efficiency of indicating the indication information (that is, the CC list).

It should be further understood that, "the NZP CSI-RS resource configuration part of the first CC including the CC list" may also implicitly indicate that the NZP CSI-RS resource configuration corresponding to each CC in the CC list is the same as the NZP CSI-RS resource configuration corresponding to the first CC. In other words, after the terminal device receives the RRC signaling, if the terminal device finds that the NZP CSI-RS resource configuration of the first CC indicates or includes the CC list, the terminal device may determine that the NZP CSI-RS resource configuration corresponding to each CC in the CC list is the same as the NZP CSI-RS resource configuration corresponding to the first CC. In other words, the network device and the terminal device have a consistent understanding of "the NZP CSI-RS resource of the first CC indicating or including the CC list".

S720: The terminal device determines CSI-RS resource configuration information of an accessed CC based on the RRC signaling.

After the terminal device receives the RRC signaling, if the CC that the terminal device needs to access is included in the CC list, the terminal device may determine, based on the CSI-RS resource configuration corresponding to the first CC, a CSI-RS resource configuration (for example, an NZP CSI-RS resource configuration used for time/frequency tracking (Time/Frequency Tracking), CSI computation (CSI computation), L1-RSRP computation, or L1-SINR computation, or a CSI-IM resource configuration) corresponding to the CC that the terminal device needs to access. That is, the CSI-RS resource configuration corresponding to the first CC is used as the CSI-RS resource configuration corresponding to the CC that needs to be accessed.

According to the RRC signaling transmission method provided in this embodiment of this application, in a carrier aggregation scenario, if an NZP CSI-RS resource configuration of a carrier (which may also be referred to as an NZP CSI-RS resource configuration corresponding to the carrier) is the same as an NZP CSI-RS resource configuration of another carrier, the indication information (for example, a CC list) may be added to the NZP CSI-RS resource configuration part of the first carrier in the RRC signaling, to indicate that the NZP CSI-RS resource configuration of the first carrier is the same as an NZP CSI-RS resource configuration of a CC in the CC list. The RRC signaling may not need to include configuration content of an NZP CSI-RS resource on another carrier. In other words, a list of available CCs is indicated in an NZP resource corresponding to the first CC. For an NZP CSI-RS resource configuration in CSI-MeasConfig of each CC included in the CC list, the resource configuration corresponding to the first CC may be followed by the CC list, and the RRC signaling may not need to include configuration information of the NZP CSI-RS resource on the another carrier (each CC included in the CC list), so that a length (overheads) of the RRC signaling is reduced, to resolve a problem of a large length (high overheads) of RRC signaling, and reduce consumption of communication resources by the RRC signaling.

Certainly, in the method 700, the indication information is described by using the CC list as an example. It should be understood that, in another implementation of this application, the indication information may alternatively be implemented in another manner, provided that the indication information may indicate that the NZP CSI-RS resource configuration of the first carrier is the same as NZP CSI-RS resource configurations of some CCs, and may further indicate specific CCs. This is not limited in embodiments of this application.

It should be further understood that, the NZP CSI-RS resource configuration is used as an example. In another implementation of this application, the NZP CSI-RS resource configuration in the method 700 may be replaced with a CSI-IM resource (CSI-IM-Resource) configuration. In other words, CSI-IM resources may also be configured for the plurality of CCs in the RRC signaling in the foregoing manner. For example, the network device may configure the CSI-IM resource for the CC in "CSI-MeasConfig" in the RRC signaling.

It should be further understood that, in another implementation of this application, the method provided in this embodiment of this application may be further used for an NZP CSI-RS resource configuration for mobility management or a ZP CSI-RS resource configuration. For the NZP CSI-RS resource configuration used for mobility management, the indication information (for example, the foregoing CC list) may be added to a "CSI-RS-ResourceConfigMobility" part corresponding to the first CC in the RRC signaling. For the ZP CSI-RS resource configuration, the indication information (for example, the foregoing CC list) may be added to a "PDSCH-Config IE" part corresponding to the first CC in the RRC signaling. In this way, the RRC signaling does not need to include an NZP CSI-RS resource configuration used for mobility management or a ZP CSI-RS resource configuration that corresponds to each CC in the CC list, so that a length (overheads) of the RRC signaling can also be reduced, to resolve a problem of a large length (high overheads) of the RRC signaling, and reduce consumption of communication resources by the RRC signaling.

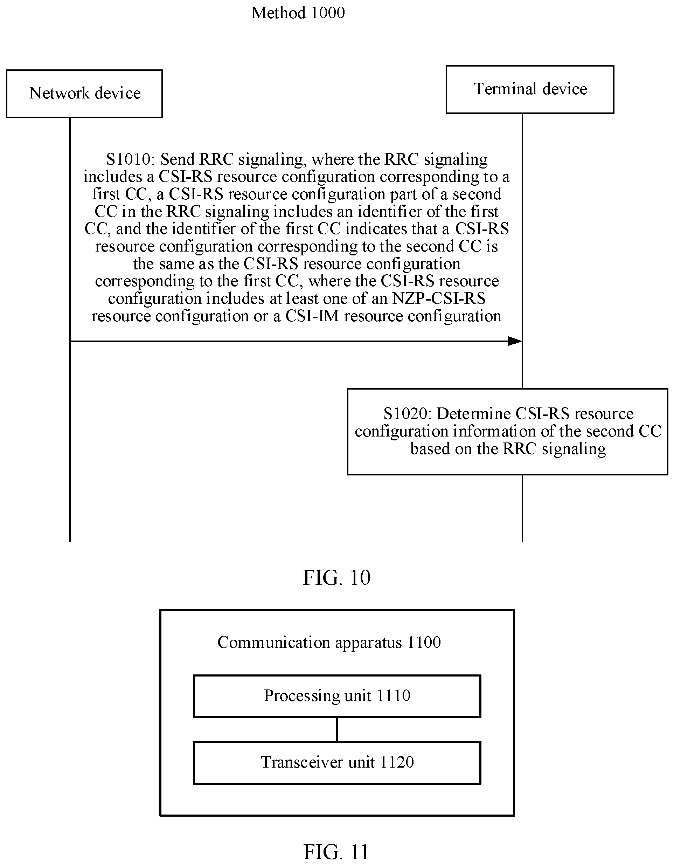

FIG. 10 is a schematic flowchart of an RRC signaling transmission method according to another embodiment of this application. As shown in FIG. 10, the method 1000 shown in FIG. 10 may include S1010 and S1020. The following describes the steps in the method 1000 in detail with reference to FIG. 10.

S1010: A network device sends RRC signaling to a terminal device, where the RRC signaling includes a CSI-RS resource configuration corresponding to a first CC, a CSI-RS resource configuration part of a second CC in the RRC signaling includes an identifier of the first CC, and the identifier of the first CC indicates that a CSI-RS resource configuration corresponding to the second CC is the same as the CSI-RS resource configuration corresponding to the first CC. The CSI-RS resource configuration includes at least one of an NZP CSI-RS resource configuration or a CSI-IM resource configuration.

Correspondingly, the terminal device receives the RRC signaling.

For a manner of configuring a first CSI-RS resource and specific content included in the CSI-RS resource configuration of the first CC, refer to descriptions of corresponding parts in the method 700. For brevity, details are not described herein again.

For example, the CSI-RS resource configuration of the first CC may also include the content of the foregoing eight items.

In the method 1000, both the first CC and the second CC are CCs serving the terminal device. For example, the first CC may be a PCC or an SCC, and the second CC may be an SCC. Certainly, both the first CC and the second CC may alternatively be SCCs.

For example, the network device may configure an NZP CSI-RS resource or a CSI-IM resource for the first CC by using "CSI-MeasConfig IE" in the RRC signaling.

It should be understood that, in the method 1000, because the CSI-RS resource configuration corresponding to the second CC is the same as the CSI-RS resource configuration corresponding to the first CC, and the RRC signaling includes CSI-RS resource configuration information corresponding to the first CC, the identifier of the first CC may be added to the CSI-RS resource configuration part of the second CC in the RRC signaling, where the identifier of the first CC indicates that the CSI-RS resource configuration corresponding to the second CC is the same as the CSI-RS resource configuration corresponding to the first CC. In this way, the RRC signaling may omit specific content of the CSI-RS resource configuration corresponding to the second CC. In other words, a CSI-RS resource does not need to be configured for the second CC in the RRC signaling, that is, specific content of the CSI-RS resource configuration of the second CC is deleted from the CSI-RS resource configuration part of the second CC in the RRC signaling. In this case, a configuration-free effect is achieved for a CSI-RS resource on the second CC. For example, NZP CSI-RS resource configuration information or CSI-IM resource configuration information of the second CC may be deleted from the RRC signaling.

For example, if CSI-RS resources need to be respectively configured for the first CC and the second CC in the RRC signaling in an existing manner, the RRC signaling needs to include two groups of fields (or two parts), and an NZP CSI-RS resource of one CC is configured for each group of fields (or each part) (where for example, the content of the foregoing eight items is configured). According to the method provided in this embodiment of this application, only the identifier of the first CC needs to be added to the CSI-RS resource configuration part corresponding to the second CC, and a length of a field indicating "the identifier of the first CC" is far less than a length of a field indicating "the CSI-RS resource configuration corresponding to the second CC". In this way, a CSI-RS resource does not need to be configured for the second CC in the RRC signaling, that is, the CSI-RS resource configuration part corresponding to the second CC in the RRC signaling does not need to include the group of fields (or the part) corresponding to the second CC. In other words, the group of fields (or the part) is saved, so that a length (overheads) of the RRC signaling is reduced, to resolve a problem of a large length (high overheads) of the RRC signaling, and reduce consumption of communication resources by RRC signaling.

For example, a "CSI-MeasConfig" part corresponding to the first CC in the RRC signaling includes configuration content corresponding to the first CC, such as a resource type (resourceType), an NZP CSI-RS-Resource identifier (NZP CSI-RS-ResourceId), resource mapping (resourceMapping), a power control offset relative to an NZP CSI-RS RE (powerControlOffset), a power control offset relative to an SSB RE (powerControlOffsetSS), a scrambling ID (scramblingID), a periodicity and a slot offset (periodicityAndOffset), or a reference to TCI-State (qcl-InfoPeriodicCSI-RS).

A "CSI-MeasConfig" part corresponding to the second CC in the RRC signaling may include only the identifier of the first CC, and does not need to include configuration content corresponding to the second CC, such as a resource type (resourceType), an NZP CSI-RS-Resource identifier (NZP CSI-RS-ResourceId), resource mapping (resourceMapping), a power control offset relative to an NZP CSI-RS RE (powerControlOffset), a power control offset relative to an SSB RE (powerControlOffsetSS), a scrambling ID (scramblingID), a periodicity and a slot offset (periodicityAndOffset), or a reference to TCI-State (qcl-InfoPeriodicCSI-RS).

It should be further understood that, "the CSI-RS resource configuration part of the second CC including the identifier of the first CC" may also implicitly indicate that the CSI-RS resource configuration corresponding to the second CC is the same as the CSI-RS resource configuration corresponding to the first CC. In other words, after the terminal device receives the RRC signaling, if the terminal device finds that the CSI-RS resource configuration part of the second CC includes the identifier of the first CC, the terminal device may determine that the CSI-RS resource configuration corresponding to the second CC is the same as the CSI-RS resource configuration corresponding to the first CC. In other words, the network device and the terminal device have a consistent understanding of "the CSI-RS resource configuration corresponding to the second CC being the same as the CSI-RS resource configuration corresponding to the first CC".

S1020: The terminal device determines CSI-RS resource configuration information of the second CC based on the RRC signaling.

After the terminal device receives the RRC signaling, if the CSI-RS resource configuration part of the second CC includes the identifier of the first CC, the terminal device may determine, based on the CSI-RS resource configuration corresponding to the first CC (for example, an NZP CSI-RS resource configuration used for time/frequency tracking (Time/Frequency Tracking), CSI computation (CSI computation), L1-RSRP computation, or L1-SINR computation, or a CSI-IM resource configuration), the CSI-RS resource configuration corresponding to the second CC. That is, the CSI-RS resource configuration corresponding to the first CC is used as the CSI-RS resource configuration corresponding to the second CC.

According to the RRC signaling transmission method provided in this embodiment of this application, in a carrier aggregation scenario, if a CSI-RS resource configuration of a carrier (for example, the first CC) is the same as a CSI-RS resource configuration of another carrier (the second CC), the identifier of the first CC may be added to the CSI-RS resource configuration part of the second carrier in the RRC signaling, where the identifier of the first CC indicates that the CSI-RS resource configuration corresponding to the second CC is the same as the CSI-RS resource configuration corresponding to the first CC. The RRC signaling may not need to include specific configuration information of a CSI-RS resource on the second CC, so that a length (overheads) of the RRC signaling is reduced, to resolve a problem of a large length (high overheads) of the RRC signaling, and reduce consumption of communication resources by the RRC signaling.

It should be further understood that, the NZP CSI-RS resource configuration is used as an example. In another implementation of this application, the NZP CSI-RS resource configuration in the method 1000 may be replaced with a CSI-IM resource (CSI-IM-Resource) configuration. In other words, CSI-IM resources may also be configured for a plurality of CCs in the RRC signaling in the foregoing manner. For example, the network device may configure the CSI-IM resource for the CC in "CSI-MeasConfig" in the RRC signaling.

It should be further understood that, in another implementation of this application, the method provided in this embodiment of this application may be further used for an NZP CSI-RS resource configuration for mobility management or a ZP CSI-RS resource configuration. For the NZP CSI-RS resource configuration used for mobility management, the identifier of the first CC may be added to a "CSI-RS-ResourceConfigMobility" part corresponding to the second CC in the RRC signaling. For the ZP CSI-RS resource configuration, the identifier of the first CC may be added to a "PDSCH-Config IE" part corresponding to the second CC in the RRC signaling. In this way, the RRC signaling does not need to include an NZP CSI-RS resource configuration used for mobility management or a ZP CSI-RS resource configuration that corresponds to the second CC, so that a length (overheads) of the RRC signaling can also be reduced, to resolve a problem of a large length (high overheads) of the RRC signaling, and reduce consumption of communication resources by the RRC signaling.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, some steps may be newly added, or any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not impose a particular limitation. Features in various manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not impose any limitation on implementation processes of embodiments of this application.

It should be further understood that the foregoing descriptions of embodiments of this application emphasize differences between embodiments. For same or similar parts that are not mentioned, refer to each other. For brevity, details are not described herein again.

The foregoing describes in detail the methods in embodiments of this application with reference to FIG. 1 to FIG. 10. The following describes in detail communication apparatuses in embodiments of this application with reference to FIG. 11 to FIG. 16.

In embodiments, division into functional modules may be performed on a terminal device and a network device according to the foregoing methods. For example, each functional module may be obtained through division based on each corresponding function, or two or more functions may be integrated into one processing module. The integrated module may be implemented in a form of hardware. It should be noted that division into the modules in embodiments is an example and is merely logical function division. There may be another division manner in an actual implementation.

It should be noted that related content of the steps in the foregoing method embodiments may be referenced to function descriptions of corresponding functional modules, and details are not described herein.

The terminal device and the network device provided in embodiments of this application are configured to perform any RRC signaling transmission method provided in the foregoing method embodiments. Therefore, effects that are the same as those of the foregoing implementation methods can be achieved. When an integrated unit is used, the terminal device or the network device may include a processing module, and an optional storage module and communication module. The processing module may be configured to: control and manage an action of the terminal device or the network device, for example, may be configured to support the terminal device or the network device in performing a step performed by a processing unit. The storage module may be configured to support storage of program code, data, and the like. The communication module may be configured to support the terminal device or the network device in communicating with another device.

The processing module may be a processor or a controller. The processor or the controller may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

For example, FIG. 11 is a block diagram of a communication apparatus 1100 according to an embodiment of this application. The communication apparatus 1100 may correspond to the network device described in the method 700 or the method 1000, or may be a chip or a component used in the network device. In addition, modules or units in the communication apparatus 1100 are respectively configured to perform actions or processing processes performed by the network device in either the method 700 or the method 1000.

As shown in FIG. 11, the apparatus 1100 may include a processing unit 1110 and a transceiver unit 1120. The transceiver unit 1120 is configured to perform specific signal receiving and sending under the control of the processing unit 1110. The processing unit may also be referred to as a processing module, and the transceiver unit may also be referred to as a communication unit or a communication module.

In some embodiments,
the processing unit 1110 is configured to generate RRC signaling, where the RRC signaling includes a CSI-RS resource configuration corresponding to a first CC and indication information, the indication information indicates that the CSI-RS resource configuration corresponding to the first CC is the same as a CSI-RS resource configuration respectively corresponding to at least one CC, and both the first CC and the at least one CC are carriers serving a terminal device, where the RRC signaling does not include the CSI-RS resource configuration respectively corresponding to the at least one CC; and
the transceiver unit 1120 is configured to send the RRC signaling.

According to the communication apparatus provided in this application, in a carrier aggregation scenario, if the CSI-RS resource configuration of the first CC is the same as a CSI-RS resource configuration of another carrier, the indication information (for example, a CC list) may be added to a CSI-RS resource configuration part of the first carrier in the RRC signaling, to indicate that the CSI-RS resource configuration of the first carrier is the same as a CSI-RS resource configuration of a CC in the CC list. The RRC signaling may not need to include configuration content of a CSI-RS resource on the another carrier, so that a length (overheads) of the RRC signaling is reduced, to resolve a problem of a large length (high overheads) of the RRC signaling, and reduce consumption of communication resources by the RRC signaling.

In some possible implementations, the indication information includes a CC list, and the CC list includes an identifier respectively corresponding to the at least one CC.

In some possible implementations, the CSI-RS resource configuration includes at least one of an NZP CSI-RS resource configuration or a CSI-IM resource configuration.

In some possible implementations, the first CC is a PCC, and the at least one CC is an SCC.

In some possible implementations, the indication information is located in an NZP CSI-RS resource configuration part in a "CSI-MeasConfig" field corresponding to the first CC.

In some other embodiments,
the processing unit 1110 is configured to generate RRC signaling, where the RRC signaling includes a CSI-RS resource configuration corresponding to a first CC, a CSI-RS resource configuration part of a second CC in the RRC signaling includes an identifier of the first CC, the identifier of the first CC indicates that a CSI-RS resource configuration corresponding to the second CC is the same as the CSI-RS resource configuration corresponding to the first CC, and both the first CC and the second CC are carriers serving a terminal device, where the CSI-RS resource configuration part of the second CC in the RRC signaling does not include the CSI-RS resource configuration corresponding to the second CC; and
the transceiver unit 1120 is configured to send the RRC signaling.

According to the communication apparatus provided in this application, in a carrier aggregation scenario, if a CSI-RS resource configuration of a carrier (for example, the first CC) is the same as a CSI-RS resource configuration of another carrier (the second CC), the identifier of the first CC may be added to the CSI-RS resource configuration part of the second carrier in the RRC signaling, where the identifier of the first CC indicates that the CSI-RS resource configuration corresponding to the second CC is the same as the CSI-RS resource configuration corresponding to the first CC. The RRC signaling may not need to include specific configuration information of a CSI-RS resource on the second CC, so that a length (overheads) of the RRC signaling is reduced, to resolve a problem of a large length (high overheads) of the RRC signaling, and reduce consumption of communication resources by the RRC signaling.

In some possible implementations, the CSI-RS resource configuration includes at least one of an NZP CSI-RS resource configuration or a CSI-IM resource configuration.

In some possible implementations, the first CC is a PCC or an SCC, and the second CC is an SCC.

In some possible implementations, the identifier of the first CC is located in an NZP CSI-RS resource configuration part in a "CSI-MeasConfig" field corresponding to the second CC.

It should be understood that, for a specific process in which the units in the communication apparatus 1100 perform corresponding steps, refer to the foregoing descriptions related to the network device with reference to a related embodiment of the method 700 or the method 1000. For brevity, details are not described herein again.

Optionally, the transceiver unit 1120 may include a receiving unit (module) and a sending unit (module), configured to perform steps of receiving information and sending information by the network device in the embodiment of the method 500.

Further, the communication apparatus 1100 may further include a storage unit. The transceiver unit 1120 may be a transceiver, an input/output interface, or an interface circuit. The storage unit is configured to store instructions executed by the transceiver unit 1120 and the processing unit 1110. The transceiver unit 1120, the processing unit 1110, and the storage unit are coupled to each other. The storage unit stores the instructions. The processing unit 1110 is configured to execute the instructions stored in the storage unit. The transceiver unit 1120 is configured to perform specific signal receiving and sending under the control of the processing unit 1110.

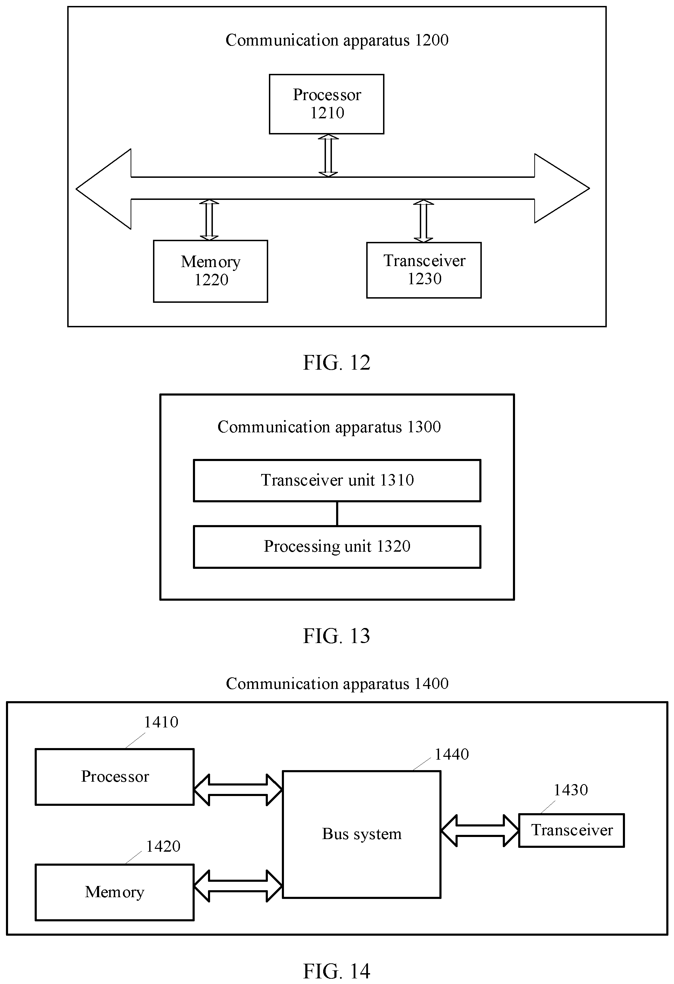

It should be understood that the transceiver unit 1120 may be a transceiver, an input/output interface, or an interface circuit. The storage unit may be a memory. The processing unit 1110 may be implemented by a processor. As shown in FIG. 12, a communication apparatus 1200 may include a processor 1210, a memory 1220, and a transceiver 1230.

The communication apparatus 1100 shown in FIG. 11 or the communication apparatus 1200 shown in FIG. 12 can implement steps performed by the network device in the method 700 or the method 1000. For similar descriptions, refer to the descriptions in the foregoing corresponding methods. To avoid repetition, details are not described herein again.

It should be further understood that the communication apparatus 1100 shown in FIG. 11 or the communication apparatus 1200 shown in FIG. 12 may be a network device, or the network device may include the communication apparatus 1100 shown in FIG. 11 or the communication apparatus 1200 shown in FIG. 12.

For example, FIG. 13 is a block diagram of a communication apparatus 1300 according to an embodiment of this application. The communication apparatus 1300 may correspond to the terminal device described in the method 700 or the method 1000, or may be a chip or a component used in the terminal device. In addition, modules or units in the communication apparatus 1300 are respectively configured to perform actions or processing processes performed by the terminal device in either the method 700 or the method 1000.

As shown in FIG. 13, the communication apparatus 1300 includes a transceiver unit 1310 and a processing unit 1320. The transceiver unit 1310 is configured to perform specific signal receiving and sending under the control of the processing unit 1320.

In some embodiments,
the transceiver unit 1310 is configured to receive RRC signaling, where the RRC signaling includes a CSI-RS resource configuration corresponding to a first CC and indication information, the indication information indicates that the CSI-RS resource configuration corresponding to the first CC is the same as a CSI-RS resource configuration respectively corresponding to at least one CC, and both the first CC and the at least one CC are carriers serving the terminal device, where the RRC signaling does not include the CSI-RS resource configuration respectively corresponding to the at least one CC; and
the processing unit 1320 is configured to determine, based on the RRC signaling, the CSI-RS resource configuration respectively corresponding to the at least one CC.

According to the communication apparatus provided in this application, in a carrier aggregation scenario, if the CSI-RS resource configuration of the first CC is the same as a CSI-RS resource configuration of another carrier, the indication information (for example, a CC list) may be added to a CSI-RS resource configuration part of the first carrier in the RRC signaling, to indicate that the CSI-RS resource configuration of the first carrier is the same as a CSI-RS resource configuration of a CC in the CC list. The RRC signaling may not need to include configuration content of a CSI-RS resource on the another carrier, so that a length (overheads) of the RRC signaling is reduced, to resolve a problem of a large length (high overheads) of the RRC signaling, and reduce consumption of communication resources by the RRC signaling.

In some possible implementations, the indication information includes a CC list, and the CC list includes an identifier respectively corresponding to the at least one CC.

In some possible implementations, the CSI-RS resource configuration includes at least one of an NZP CSI-RS resource configuration or a CSI-IM resource configuration.

In some possible implementations, the first CC is a PCC, and the at least one CC is an SCC.

In some possible implementations, the indication information is located in an NZP CSI-RS resource configuration part in a "CSI-MeasConfig" field corresponding to the first CC.

In some other embodiments, the transceiver unit 1310 is configured to receive RRC signaling, where the RRC signaling includes a CSI-RS resource configuration corresponding to a first CC, a CSI-RS resource configuration part of a second CC in the RRC signaling includes an identifier of the first CC, the identifier of the first CC indicates that a CSI-RS resource configuration corresponding to the second CC is the same as the CSI-RS resource configuration corresponding to the first CC, and both the first CC and the second CC are carriers serving the terminal device, where the CSI-RS resource configuration part of the second CC in the RRC signaling does not include the CSI-RS resource configuration corresponding to the second CC; and
the processing unit 1320 is configured to determine, based on the RRC signaling, the CSI-RS resource configuration corresponding to the second CC.

According to the communication apparatus provided in this application, in a carrier aggregation scenario, if a CSI-RS resource configuration of a carrier (for example, the first CC) is the same as a CSI-RS resource configuration of another carrier (the second CC), the identifier of the first CC may be added to the CSI-RS resource configuration part of the second carrier in the RRC signaling, where the identifier of the first CC indicates that the CSI-RS resource configuration corresponding to the second CC is the same as the CSI-RS resource configuration corresponding to the first CC. The RRC signaling may not need to include specific configuration information of a CSI-RS resource on the second CC, so that a length (overheads) of the RRC signaling is reduced, to resolve a problem of a large length (high overheads) of the RRC signaling, and reduce consumption of communication resources by the RRC signaling.

In some possible implementations, the CSI-RS resource configuration includes at least one of an NZP CSI-RS resource configuration or a CSI-IM resource configuration.

In some possible implementations, the first CC is a PCC or an SCC, and the second CC is an SCC.

In some possible implementations, the identifier of the first CC is located in an NZP CSI-RS resource configuration part in a "CSI-MeasConfig" field corresponding to the second CC.

Further, the communication apparatus 1300 may include a storage unit, and the transceiver unit 1310 may be a transceiver, an input/output interface, or an interface circuit. The storage unit is configured to store instructions executed by the transceiver unit 1310 and the processing unit 1320. The transceiver unit 1310, the processing unit 1320, and the storage unit are coupled to each other. The storage unit stores the instructions. The processing unit 1320 is configured to execute the instructions stored in the storage unit. The transceiver unit 1310 is configured to perform specific signal receiving and sending under the control of the processing unit 1320.

It should be understood that, for a specific process in which the units in the communication apparatus 1300 perform corresponding steps, refer to the foregoing descriptions related to the terminal device with reference to a related embodiment of the method 700 or the method 1000. For brevity, details are not described herein again.

It should be understood that the transceiver unit 1310 may be a transceiver, an input/output interface, or an interface circuit. The storage unit may be a memory. The processing unit 1320 may be implemented by a processor.

For example, as shown in FIG. 14, a communication apparatus 1400 may include a processor 1410, a memory 1420, a transceiver 1430, and a bus system 1440. The components of the communication apparatus 1400 are coupled together by using the bus system 1440. In addition to a data bus, the bus system 1440 may further include a power bus, a control bus, a status signal bus, and the like. However, for clear description, various buses are marked as the bus system 1440 in FIG. 14. For ease of illustration, FIG. 14 is merely an example for illustration.

The communication apparatus 1300 shown in FIG. 13 or the communication apparatus 1400 shown in FIG. 14 can implement steps performed by the terminal device in the method 700 or the method 1000. For similar descriptions, refer to the descriptions in the foregoing corresponding methods. To avoid repetition, details are not described herein again.

It should be further understood that the communication apparatus 1300 shown in FIG. 13 or the communication apparatus 1400 shown in FIG. 14 may be a terminal device, or the terminal device may include the communication apparatus 1300 shown in FIG. 13 or the communication apparatus 1400 shown in FIG. 14.

It should be further understood that division into the units in the apparatus is merely logical function division. In an actual implementation, all or some of the units may be integrated into one physical entity, or may be physically separated. In addition, all the units in the apparatus may be implemented in a form of software invoked by a processing element, or may be implemented in a form of hardware; or some of the units may be implemented in a form of software invoked by a processing element, and some of the units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form of software invoked by the processing element.

For example, a unit in any one of the foregoing apparatuses may be one or more integrated circuits configured to implement the foregoing methods, for example, one or more application-specific integrated circuits (application-specific integrated circuits, ASICs), one or more DSPs, one or more field programmable gate arrays (field programmable gate arrays, FPGAs), or a combination of at least two of the integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, the units may be integrated and implemented in a form of a system-on-chip (system-on-chip, SoC).

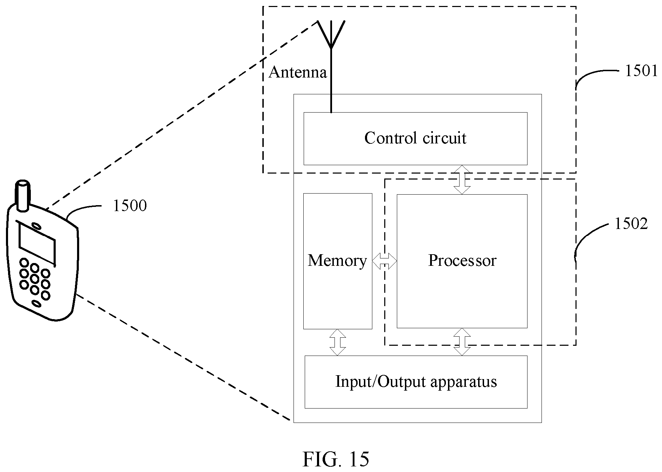

FIG. 15 is a diagram of a structure of a terminal device 1500 according to this application. The communication apparatus 1300 or the communication apparatus 1400 may be disposed in the terminal device 1500. Alternatively, the communication apparatus 1300 or the communication apparatus 1400 may be the terminal device 1500. In other words, the terminal device 1500 may perform an action performed by the terminal device in the method 700 or the method 1000. Optionally, for ease of description, FIG. 15 shows only main components of the terminal device. As shown in FIG. 15, the terminal device 1500 includes a processor, a memory, a control circuit, an antenna, and an input/output apparatus.

The processor is mainly configured to: process a communication protocol and communication data; control the entire terminal device; execute a software program; and process data of the software program. For example, the processor is configured to support the terminal device in performing an action described in the embodiment of the foregoing RRC signaling transmission method. The memory is mainly configured to store a software program and data, for example, store the CSI-RS resource configuration corresponding to each CC and described in the foregoing embodiments. The control circuit is mainly configured to: perform conversion between a baseband signal and a radio frequency signal and process the radio frequency signal. The control circuit and the antenna together may also be referred to as a transceiver, and are mainly configured to: receive and send a radio frequency signal in a form of an electromagnetic wave, for example, receive the RRC signaling described in the foregoing embodiments. The input/output apparatus, for example, a touchscreen, a display, or a keyboard, is mainly configured to: receive data input by a user and output data to the user.

After the terminal device is powered on, the processor may read the software program in the storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When signaling (for example, the foregoing RRC signaling) is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 15 shows only one memory and one processor. In an actual terminal device, there may be a plurality of processors and a plurality of memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 15. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, an antenna having receiving and sending functions and a control circuit may be considered as a transceiver unit 1501 of the terminal device 1500, and a processor having a processing function may be considered as a processing unit 1502 of the terminal device 1500. As shown in FIG. 15, the terminal device 1500 includes the transceiver unit 1501 and the processing unit 1502. The transceiver unit may also be referred to as a transceiver, a transceiver machine, a transceiver apparatus, or the like. Optionally, a component that is in the transceiver unit 1501 and that is configured to implement the receiving function may be considered as a receiving unit, and a component that is in the transceiver unit 1501 and that is configured to implement the sending function may be considered as a sending unit. In other words, the transceiver unit 1501 includes the receiving unit and the sending unit. For example, the receiving unit may also be referred to as a receiver, a receiving machine, or a receiving circuit, and the sending unit may also be referred to as a transmitter, a transmitting machine, or a transmitting circuit.

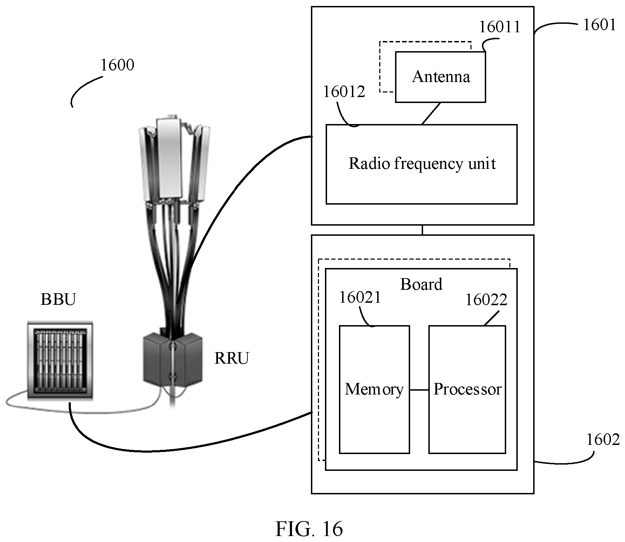

FIG. 16 is a diagram of a structure of a network device 1600 according to an embodiment of this application. The network device 1600 may be configured to implement functions of the network device in the foregoing methods. The network device 1600 includes one or more radio frequency units, such as a remote radio unit (remote radio unit, RRU) 1601 and one or more baseband units (baseband units, BBUs) (which may also be referred to as digital units, digital units, DUs) 1602. The RRU 1601 may be referred to as a transceiver unit, a transceiver machine, a transceiver circuit, a transceiver, or the like, and may include at least one antenna 16011 and a radio frequency unit 16012. The RRU 1601 is mainly configured to: receive and send a radio frequency signal and perform conversion between the radio frequency signal and a baseband signal, for example, configured to send the plurality groups of data streams and the indication information in the foregoing embodiments to the terminal device. The BBU 1602 is mainly configured to: perform baseband processing, control a base station, and so on. The RRU 1601 and the BBU 1602 may be physically disposed together, or may be physically disposed separately, namely, a distributed base station.

The BBU 1602 is a control center of the base station, may also be referred to as a processing unit, and is mainly configured to perform baseband processing functions such as channel coding, multiplexing, modulation, and spreading. For example, the BBU (processing unit) 1602 may be configured to control the base station to perform an operation procedure related to the network device in the foregoing method embodiments.

In an example, the BBU 1602 may include one or more boards. A plurality of boards may jointly support a radio access network (for example, an LTE system or a 5G system) of a single access standard, or may respectively support radio access networks of different access standards. The BBU 1602 further includes a memory 16021 and a processor 16022. The memory 16021 is configured to store instructions and data that are necessary. For example, the memory 16021 stores the first DCI and the information about the uplink precoding matrix corresponding to the uplink resource at the subband granularity in the foregoing embodiments. The processor 16022 is configured to control the base station to perform a necessary action, for example, configured to control the base station to perform an operation procedure related to the network device in the foregoing method embodiments. The memory 16021 and the processor 16022 may serve one or more boards. In other words, a memory and a processor may be disposed on each board. Alternatively, a plurality of boards may share a same memory and a same processor. In addition, a necessary circuit may be further disposed on each board.

In a possible implementation, with development of a system-on-chip (system-on-chip, SoC) technology, all or some of functions of the parts 1602 and 1601 may be implemented by using the SoC technology, for example, implemented by using one base station function chip. The base station function chip integrates components such as a processor, a memory, and an antenna interface. A program of a base station related function is stored in the memory, and the processor executes the program to implement the base station related function. Optionally, the base station function chip can also read a memory outside the chip to implement the base station related function.

It should be understood that the structure of the network device shown in FIG. 16 is merely a possible form, but should not constitute any limitation on embodiments of this application. This application does not rule out a possibility that there may be a base station structure in another form in the future.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an EPROM, an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a communication system. The communication system includes the foregoing terminal device and the foregoing network device.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner.

An embodiment of this application further provides a computer-readable medium, configured to store computer program code. The computer program includes instructions used to perform any RRC signaling transmission method provided in the foregoing embodiments of this application. The readable medium may be the memory in the foregoing example. This is not limited in embodiments of this application.

This application further provides a computer program product. The computer program product includes instructions. When the instructions are executed, a terminal device is caused to perform corresponding operations of the terminal device in the foregoing methods, or a network device is caused to perform corresponding operations of the network device in the foregoing methods.

An embodiment of this application further provides a chip. The chip includes a processing unit and a communication unit. The processing unit may be, for example, a processor, and the communication unit may be, for example, an input/output interface, a pin, or a circuit. The processing unit may execute computer instructions, to cause a chip in the communication apparatus to perform any RRC signaling transmission method provided in the foregoing embodiments of this application.

Optionally, any communication apparatus provided in embodiments of this application may include the chip.

Optionally, the computer instructions are stored in a storage unit.

Optionally, the storage unit is a storage unit in the chip, for example, a register or a cache. Alternatively, the storage unit may be a storage unit that is in the communication apparatus and that is located outside the chip, for example, a ROM, another type of static storage device that can store static information and instructions, or a RAM. The processor described above may be a CPU, a microprocessor, an ASIC, or one or more integrated circuits configured to control execution of a program for the RRC signaling transmission method. The processing unit and the storage unit may be decoupled, are disposed on different physical devices respectively, and are connected in a wired or wireless manner to implement respective functions of the processing unit and the storage unit, to support the chip in implementing various functions in the foregoing embodiments. Alternatively, the processing unit and the memory may be coupled to a same device.

The terms "system" and "network" may be used interchangeably in this specification. The term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

In this application, names may be assigned to various objects such as messages/information/devices/systems/apparatuses/actions/operations/procedures. It may be understood that the specific names do not constitute a limitation on the related objects. The assigned names may vary with factors such as scenarios, contexts, or usage habits. Understandings of technical meanings of technical terms in this application should be determined mainly based on functions and technical effects embodied/performed by the technical terms in the technical solutions.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or the units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An RRC signaling transmission method, wherein the method comprises:
sending RRC signaling, wherein the RRC signaling comprises a CSI-RS resource configuration corresponding to a first CC and indication information, the indication information indicates that the CSI-RS resource configuration corresponding to the first CC is the same as a CSI-RS resource configuration respectively corresponding to at least one CC, and both the first CC and the at least one CC are carriers serving a terminal device.

2. The method according to claim 1, wherein the RRC signaling does not comprise the CSI-RS resource configuration respectively corresponding to the at least one CC.

3. The method according to claim 1 or 2, wherein the indication information comprises a CC list, and the CC list comprises an identifier respectively corresponding to the at least one CC.

4. The method according to any one of claims 1 to 3, wherein the CSI-RS resource configuration comprises at least one of an NZP CSI-RS resource configuration or a CSI-IM resource configuration.

5. The method according to any one of claims 1 to 4, wherein the first CC is a PCC, and the at least one CC is an SCC.

6. The method according to any one of claims 1 to 5, wherein the indication information is located in an NZP CSI-RS resource configuration part in a "CSI-MeasConfig" field corresponding to the first CC.

7. An RRC signaling transmission method, wherein the method comprises:
sending RRC signaling, wherein the RRC signaling comprises a CSI-RS resource configuration corresponding to a first CC, a CSI-RS resource configuration part of a second CC in the RRC signaling comprises an identifier of the first CC, the identifier of the first CC indicates that a CSI-RS resource configuration corresponding to the second CC is the same as the CSI-RS resource configuration corresponding to the first CC, and both the first CC and the second CC are carriers serving a terminal device.

8. The method according to claim 7, wherein the CSI-RS resource configuration part of the second CC in the RRC signaling does not comprise the CSI-RS resource configuration corresponding to the second CC.

9. The method according to claim 7 or 8, wherein the CSI-RS resource configuration comprises at least one of an NZP CSI-RS resource configuration or a CSI-IM resource configuration.

10. The method according to any one of claims 7 to 9, wherein the first CC is a PCC or an SCC, and the second CC is an SCC.

11. The method according to any one of claims 7 to 10, wherein the identifier of the first CC is located in an NZP CSI-RS resource configuration part in a "CSI-MeasConfig" field corresponding to the second CC.

12. An RRC signaling transmission method, wherein the method comprises:
receiving RRC signaling, wherein the RRC signaling comprises a CSI-RS resource configuration corresponding to a first CC and indication information, the indication information indicates that the CSI-RS resource configuration corresponding to the first CC is the same as a CSI-RS resource configuration respectively corresponding to at least one CC, and both the first CC and the at least one CC are carriers serving a terminal device; and
determining, based on the RRC signaling, the CSI-RS resource configuration respectively corresponding to the at least one CC.

13. The method according to claim 12, wherein the RRC signaling does not comprise the CSI-RS resource configuration respectively corresponding to the at least one CC.

14. The method according to claim 12 or 13, wherein the indication information comprises a CC list, and the CC list comprises an identifier respectively corresponding to the at least one CC.

15. The method according to any one of claims 12 to 14, wherein the CSI-RS resource configuration comprises at least one of an NZP CSI-RS resource configuration or a CSI-IM resource configuration.

16. The method according to any one of claims 12 to 15, wherein the first CC is a PCC, and the at least one CC is an SCC.

17. The method according to any one of claims 12 to 16, wherein the indication information is located in an NZP CSI-RS resource configuration part in a "CSI-MeasConfig" field corresponding to the first CC.

18. An RRC signaling transmission method, wherein the method comprises:
receiving RRC signaling, wherein the RRC signaling comprises a CSI-RS resource configuration corresponding to a first CC, a CSI-RS resource configuration part of a second CC in the RRC signaling comprises an identifier of the first CC, and the identifier of the first CC indicates that a CSI-RS resource configuration corresponding to the second CC is the same as the CSI-RS resource configuration corresponding to the first CC; and
determining, based on the RRC signaling, the CSI-RS resource configuration corresponding to the second CC.

19. The method according to claim 18, wherein the CSI-RS resource configuration part of the second CC in the RRC signaling does not comprise the CSI-RS resource configuration corresponding to the second CC.

20. The method according to claim 18 or 19, wherein the CSI-RS resource configuration comprises at least one of an NZP CSI-RS resource configuration or a CSI-IM resource configuration.

21. The method according to any one of claims 18 to 20, wherein the first CC is a PCC or an SCC, and the second CC is an SCC.

22. The method according to any one of claims 18 to 21, wherein the identifier of the first CC is located in an NZP CSI-RS resource configuration part in a "CSI-MeasConfig" field corresponding to the second CC.

23. A communication apparatus, comprising a unit configured to perform steps of the method according to any one of claims 1 to 11, or a unit configured to perform steps of the method according to any one of claims 12 to 22.

24. A communication apparatus, comprising at least one processor and an interface circuit, wherein the at least one processor is configured to perform the method according to any one of claims 1 to 11 or the method according to any one of claims 12 to 22.

25. A communication apparatus, comprising a processor, wherein the processor is coupled to a memory, the memory is configured to store a program or instructions, and when the program or the instructions are executed by the processor, the apparatus is caused to perform the method according to any one of claims 1 to 11 or the method according to any one of claims 12 to 22.

26. A computer-readable storage medium, wherein the computer-readable storage medium stores a computer program, the computer program comprises program instructions, and when the program instructions are executed by a processor, the processor is caused to perform the method according to any one of claims 1 to 11 or the method according to any one of claims 12 to 22.

27. A chip, comprising a processor, configured to: invoke a computer program from a memory and run the computer program, to cause a communication device in which the chip is installed to perform the method according to any one of claims 1 to 11 or the method according to any one of claims 12 to 22.

28. A computer program product, comprising a computer program, wherein when being executed by a processor, the computer program is configured to perform the method according to any one of claims 1 to 11 or the method according to any one of claims 12 to 22.

29. A system, comprising at least one communication apparatus, wherein the communication apparatus is configured to perform the method according to any one of claims 1 to 11.
